(19) Europäisches Patentamt
European Patent Office
Office européen des brevets

(11) EP 3 523 382 B1

(12) **EUROPÄISCHE PATENTSCHRIFT**

(45) Veröffentlichungstag und Bekanntmachung des Hinweises auf die Patenterteilung:
**18.11.2020 Patentblatt 2020/47**

(21) Anmeldenummer: **17780407.7**

(22) Anmeldetag: **06.10.2017**

(51) Int Cl.:
***C09D 5/03*** *(2006.01)* ***C08F 265/06*** *(2006.01)*
***C08F 285/00*** *(2006.01)* ***C09D 151/00*** *(2006.01)*
***C08F 2/24*** *(2006.01)* ***C09D 7/40*** *(2018.01)*
***C09D 5/02*** *(2006.01)*

(86) Internationale Anmeldenummer:
**PCT/EP2017/075466**

(87) Internationale Veröffentlichungsnummer:
**WO 2018/065571 (12.04.2018 Gazette 2018/15)**

(54) **VERFAHREN ZUR HERSTELLUNG VON WÄSSRIGEN DISPERSIONEN**
METHOD FOR PRODUCING AQUEOUS DISPERSIONS
PROCEDE DE PRÉPARATION DE DISPERSIONS AQUEUSES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.10.2016 EP 16192863**

(43) Veröffentlichungstag der Anmeldung:
**14.08.2019 Patentblatt 2019/33**

(73) Patentinhaber: **BASF SE**
**67056 Ludwigshafen am Rhein (DE)**

(72) Erfinder:
- **KEHRLOESSER, Daniel**
**68161 Mannheim (DE)**
- **LESWIN, Joost**
**68309 Mannheim (DE)**
- **WIESE, Harm**
**69514 Laudenbach (DE)**
- **STEINBACH, Tobias**
**67227 Frankenthal (DE)**

(74) Vertreter: **BASF IP Association**
**BASF SE**
**GBI-C006**
**67056 Ludwigshafen (DE)**

(56) Entgegenhaltungen:
**WO-A1-2015/024835**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 523 382 B1

## Beschreibung

Die vorliegende Erfindung betrifft ein Verfahren zur Herstellung einer wässrigen Dispersion von Polymerteilchen durch radikalische wässrige Emulsionspolymerisation sowie deren Verwendung in Anstrichmitteln, Papierbeschichtungen, Schäumen, Pflanzenschutzmitteln, kosmetischen Mitteln, Tinten oder thermoplastischen Formmassen.

Organische Hohlteilchen sind eine besondere Art von Kern-Schale-Teilchen, die in getrockneter Form aus einem luftgefüllten Hohlraum, umgeben von einer harten Hülle bestehen. Aufgrund dieses Aufbaus haben sie die besondere Eigenschaft, Licht zu streuen, wodurch ihr Einsatz als Weißpigment in Papierbeschichtungen und in kosmetischen Mitteln, beispielsweise Sonnencremes, begründet liegt. Dort ersetzen sie teilweise das anorganische Weißpigment Titandioxid ($TiO_2$) und verstärken zusätzlich die Wirkung des verbliebenen $TiO_2$.

C. J. McDonald und M. J. Devon beschreiben in Advances in Colloid and Interface Science 2002, 99, 181-213 eine Reihe von Möglichkeiten zur Herstellung dieser Hohlteilchen wie unter anderem die Quellung mit organischen Lösungsmitteln oder Treibmitteln, Verkapselung von Kohlenwasserstoffen oder Ansätze, aufbauend auf W/O/W-Emulsionen. Die aus ökologischen wie auch aus ökonomischen Gründen bevorzugte Methode ist allerdings die osmotische Quellung spezieller Kern-Schale-Teilchen.

WO 2015/024882 beschreibt ein Verfahren zur Herstellung von Emulsionspolymerteilchen mit einer Kern-Schale-Struktur. Das Mehrstufenemulsionspolymer wird durch sequentielle Polymerisation erhalten. Die Herstellung der Saat erfolgt durch radikalisch wässrige Emulsionspolymerisation von mindestens eines nicht-ionischen ethylenisch ungesättigten Monomers und mindestens eines nicht-ionischen ethylenisch ungesättigten hydrophilen Monomers. Anschließend wird eine Quellsaat in Gegenwart der so erhaltenen Saat hergestellt. Auf diese Quellsaat wird in einem weiteren Polymerisationsschritt wenigstens eine Schale aufpolymerisiert, wobei ein man ein Emulsionspolymerisat erhält. Wird die Quellsaat in Gegenwart der so erhaltenen Saat hergestellt, zeigen die als Emulsionspolymerisat erhaltenen organischen Hohlteilchen nur dann die gewünschten Eigenschaften, wenn größere Mengen an Vernetzer verwendet werden.

WO 2015/024835 beschreibt ein Verfahren zur Herstellung von Emulsionspolymerteilchen mit einer Kern-Schale-Struktur, wobei im Kern mindestens eine nicht-ionische polyalkylenoxid-haltige Substanz verwendet wird. Das Mehrstufenemulsionspolymer wird durch sequenzielle Polymerisation eines Kernstufenpolymers und eines Hüllstufenpolymers erhalten. Die Herstellung des Kernstufenpolymers erfolgt durch Polymerisation eines Quellkerns. Anschließend wird die erste und die weiteren Schalen um den Kern polymerisiert.

Als nachteilig erweist sich, dass die so erhaltenen wässrigen Dispersionen des Kernstufenpolymers nicht lagerstabil sind, insbesondere, wenn sie über einen langen Zeitraum bei erhöhten Temperaturen gelagert werden.

Aufgabe der vorliegenden Erfindung ist die Bereitstellung eines Herstellverfahrens für Emulsionspolymerteilchen bzw. für wässrige Dispersionen von Emulsionspolymerteilchen, insbesondere für organische Hohlteilchen, die über einen längeren Zeitraum auch bei höheren Temperaturen lagerstabil sind. Zudem sollten die Dispersionen von Emulsionspolymerteilchen auch ohne größere Mengen an Vernetzer einen verbesserten Weißgrad aufweisen.

Überraschenderweise wurde gefunden, dass diese und weitere Aufgaben durch das im Folgenden beschriebene Verfahren zur Herstellung einer wässrigen Dispersion von Polymerteilchen durch radikalische wässrige Emulsionspolymerisation gelöst werden.

Ein erster Gegenstand der Erfindung ist daher ein Verfahren zur Herstellung einer wässrigen Dispersion von Polymerteilchen durch radikalische wässrige Emulsionspolymerisation, umfassend die folgenden Schritte:

i) Herstellung einer wässrigen Dispersion eines Saatpolymers durch radikalische wässrige Emulsionspolymerisation einer wässrigen Monomeremulsion, enthaltend:

a) 25,0 bis 99,9 Gew.-%, insbesondere 50,0 bis 79,9 Gew.-%, besonders 60,0 bis 75,0 Gew.-% mindestens eines nicht-ionischen, monoethylenisch ungesättigten Monomeren M1 mit einer Wasserlöslichkeit $\leq$ 50 g/L bei 20 °C, bezogen auf das Gesamtgewicht der in Schritt i) eingesetzten Monomere und der polyalkylenoxid-haltigen Substanz,

b) 0 bis 15,0 Gew.-%, insbesondere 0,1 bis 10,0 Gew.-%, besonders 0,5 bis 2,0 Gew.-% eines oder mehrerer monoethylenisch ungesättigter Monomere M2, ausgewählt unter Monomeren M2a, die wenigstens eine anionische oder anionogene Gruppe tragen und neutralen Monomeren M2b, die eine Wasserlöslichkeit von > 50 g/L bei 20 °C aufweisen, und deren Gemischen, bezogen auf das Gesamtgewicht der in Schritt i) eingesetzten Monomere und der polyalkylenoxid-haltigen Substanz und

c) 0,1 bis 60,0 Gew.-%, insbesondere 20,0 bis 40,0 Gew.-%, besonders 24,5 bis 38,0 Gew.-% mindestens einer polyalkylenoxid-haltigen Substanz, bezogen auf das Gesamtgewicht der in Schritt i) eingesetzten Monomere und der polyalkylenoxid-haltigen Substanz;

ii) Herstellung einer wässrigen Dispersion einer Quellsaat durch radikalische wässrige Emulsionspolymerisation einer wässrigen Suspoemulsion, enthaltend:

d) 5 bis 99,9 Gew.-%, insbesondere 45,0 bis 99,8 Gew.-%, besonders 65 bis 99,0 Gew.-% mindestens eines nicht-ionischen, monoethylenisch ungesättigten Monomers M3 mit einer Wasserlöslichkeit ≤ 50 g/L bei 20 °C, bezogen auf das Gesamtgewicht der in Schritt ii) eingesetzten Monomere und des Saatpolymers aus Schritt i),

e) 0 bis 75,0 Gew.-%, insbesondere 0,1 bis 50,0 Gew.-%, besonders 0,5 bis 30 Gew.-% eines oder mehrerer ethylenisch ungesättigter Monomere M4, ausgewählt unter Monomeren M4a, die wenigstens eine anionische oder anionogene Gruppe tragen und neutralen Monomeren M4b, die eine Wasserlöslichkeit von > 50 g/L bei 20 °C aufweisen, und deren Gemischen, bezogen auf das Gesamtgewicht der in Schritt ii) eingesetzten Monomere und des Saatpolymers aus Schritt i), und

f) 0,1 bis 20,0 Gew.-%, 0,1 bis 15,0 Gew.-%, besonders 0,5 bis 5,0 Gew.-% des in Schritt i) erhaltenen Saatpolymers, bezogen auf das Gesamtgewicht der in Schritt ii) eingesetzten Monomere und des Saatpolymers aus Schritt i);

iii) anschließende Bildung wenigstens einer Polymerschale durch radikalische wässrige Emulsionspolymerisation von schalenbildenden Monomeren M5 in Gegenwart von der in Schritt ii) erhaltenen Quellsaat unter Bildung von einer wässrigen Dispersion von Emulsionspolymerteilchen; und

iv) anschließende Neutralisation der in Schritt iii) erhaltenen wässrigen Dispersion auf einem pH-Wert von mindestens 7,5 mit mindestens einer Base.

Ein weiterer Gegenstand der Erfindung sind die nach dem erfindungsgemäßen Verfahren erhältlichen wässrigen Polymerdispersionen. Die Polymerteilchen weisen eine Kern-Schale-Struktur mit wenigstens drei Polymerphasen auf, wobei ihre Monomerenzusammensetzung den in den Schritten i), ii) und iii) eingesetzten Monomeren entspricht. Zudem weisen die Polymerteilchen eingeschlossenes Wasser auf (innerer Wassergehalt). Die erfindungsgemäß hergestellte wässrige Polymerdispersion weist insbesondere einen inneren Gehalt an Wasser von 20 % bis 40 %, besonders 25 % bis 35 %, bezogen auf den Gesamtwassergehalt der Dispersion auf. Zudem weisen sie einen verbesserten Weißgrad auf, bzw. es wird eine geringere Aufwandmenge an Vernetzer benötigt, um den gewünschten Weißgrad zu erzielen.

Ein weiterer Gegenstand der Erfindung ist die Verwendung der erfindungsgemäß erhältlichen wässrigen Dispersion von Polymerteilchen als Anstrichmittel, Papierbeschichtungen, Schäume, Pflanzenschutzmittel, kosmetischen Mitteln, Tinten oder thermoplastischen Formmassen.

Ein weiterer Gegenstand der Erfindung ist die Verwendung der wässrigen Polymerdispersion zur Erhöhung des Weißgrades in Anstrichmitteln.

Ein weiterer Gegenstand der Erfindung sind Anstrichmittel, enthaltend eine erfindungsgemäß erhältliche wässrige Polymerdispersion.

Durch das erfindungsgemäße Verfahren ist es möglich, über einen längeren Zeitraum lagerstabile wässrige Dispersionen von Polymerteilchen bereitzustellen. Diese sind auch bei erhöhter Temperatur lagerstabil. Zudem weisen die wässrigen Dispersionen einen verbesserten Weißgrad auf. Außerdem ist es möglich, die Teilchengröße des Quellkerns zu kontrollieren, da die Teilchengrößenverteilung nur von der Saatmenge abhängig ist.

Im Rahmen der vorliegenden Erfindung umfasst der Ausdruck "Alkyl" lineare und verzweigte Alkylgruppen, speziell mit 1 bis 30 Kohlenstoffatomen, d. h. für "$C_1$-$C_{30}$-Alkyl", bevorzugt umfasst der Ausdruck "Alkyl" lineare und verzweigte Alkylgruppen, mit 1 bis 20 Kohlenstoffatomen, d. h. für "$C_1$-$C_{20}$-Alkyl".

Geeignete kurzkettige Alkylgruppen sind beispielsweise lineare oder verzweigte $C_1$-$C_7$-Alkyl-, bevorzugt $C_1$-$C_6$-Alkyl- und besonders bevorzugt $C_1$-$C_4$-Alkylgruppen. Dazu zählen insbesondere Methyl, Ethyl, Propyl, Isopropyl, n-Butyl, 2-Butyl, sec.-Butyl, tert.-Butyl, n-Pentyl, 2-Pentyl, 2-Methylbutyl, 3-Methylbutyl, 1,2-Dimethylpropyl, 1,1-Dimethylpropyl, 2,2-Dimethylpropyl, 1-Ethylpropyl, n-Hexyl, 2-Hexyl, 2-Methylpentyl, 3-Methylpentyl, 4-Methylpentyl, 1,2-Dimethylbutyl, 1,3-Dimethylbutyl, 2,3-Dimethylbutyl, 1,1-Dimethylbutyl, 2,2-Dimethylbutyl, 3,3-Dimethylbutyl, 1,1,2-Trimethylpropyl, 1,2,2-Trimethylpropyl, 1-Ethylbutyl, 2-Ethylbutyl, 1-Ethyl-2-methylpropyl, n-Heptyl, 2-Heptyl, 3-Heptyl, 2-Ethylpentyl, 1-Propylbutyl, etc.

Geeignete längerkettige Alkylgruppen sind beispielsweise lineare und verzweigte $C_8$-$C_{30}$-Alkylgruppen, bevorzugt $C_8$-$C_{20}$-Alkylgruppen. Bevorzugt handelt es sich dabei um überwiegend lineare Alkylreste, wie sie auch in natürlichen oder synthetischen Fettsäuren und Fettalkoholen sowie Oxoalkoholen vorkommen. Dazu zählen beispielsweise n-Octyl, n-Nonyl, n-Decyl, n-Undecyl, n-Dodecyl, n-Tridecyl, n-Tetradecyl, n-Pentadecyl, n-Hexadecyl, n-Heptadecyl, n-Octadecyl und n-Nonadecyl. Der Ausdruck Alkyl umfasst unsubstituierte und substituierte Alkylreste.

Die vorstehenden Ausführungen zu Alkyl gelten sinngemäß auch für die Alkylgruppen in O-Alkylrest, für Alkylgruppen in Alkanol, Alkylamin, Alkancarbonsäuren und Alkylestern.

Der Ausdruck "Alkylen" steht im Rahmen der vorliegenden Erfindung für lineare oder verzweigte Alkandiyl-Gruppen mit 1 bis 7 Kohlenstoffatomen, wie beispielsweise Methylen, 1,2-Ethylen, 1,2-Propylen, 1,3-Propylen, 1,2-Butylen, 1,3-Butylen, 1,4-Butylen, 2-Methyl-1,2-propylen, etc.

Der Ausdruck "O-Alkyl" steht im Rahmen der vorliegenden Erfindung für eine Alkylgruppe wie oben definiert, die über ein Sauerstoffatom (O) zum Restmolekül verknüpft ist.

Der Ausdruck "Allyl" steht im Rahmen der der vorliegenden Erfindung für eine -($CH_2$)-CH=$CH_2$-Gruppe.

Der Ausdruck "O-Allyl" steht im Rahmen der vorliegenden Erfindung für eine Allylgruppe, die über ein Sauerstoffatom (O) zum Restmolekül verknüpft ist.

Der Begriff "monoethylenisch ungesättigte $C_3$-$C_8$-Monocarbonsäure" steht für eine einwertige Carbonsäure mit 3 bis 8 C-Atomen, die eine ethylenisch ungesättigte C=C-Doppelbindung aufweist, z. B. für Acrylsäure, Methacrylsäure, Vinylessigsäure oder Crotonsäure.

Der Begriff "monoethylenisch ungesättigte $C_4$-$C_8$-Dicarbonsäure" steht für eine zweiwertige Carbonsäure mit 4 bis 8 C-Atomen, die eine ethylenisch ungesättigte C=C-Doppelbindung aufweist, z. B. für Maleinsäure, Fumarsäure, Itaconsäure oder Citraconsäure.

Unter anionogenen Gruppen werden im Rahmen der Erfindung Säuregruppen, bevorzugt Carboxygruppen (-COOH) verstanden. Unter anionischen Gruppen wird im Rahmen der Erfindung insbesondere deprotonierte Carboxygruppe bzw. Carboxylatgruppe ($-COO^-$) verstanden, aber auch Sulfonat - oder Phosphonatgruppen.

Schritt i):

In Schritt i) erfolgt die Herstellung einer wässrigen Dispersion eines Saatpolymers durch radikalische wässrige Emulsionspolymerisation einer wässrigen Monomeremulsion, enthaltend die Monomere M1, wie oben und im Folgenden definiert, M2, wie oben und im Folgenden definiert, und mindestens eine polyalkylenoxid-haltige Substanz, wie oben und im Folgenden definiert.

Die Saat bezieht sich im Rahmen der vorliegenden Erfindung auf eine wässrige Polymerdispersion, die zu Beginn der radikalischen wässrigen Emulsionspolymerisation zur Herstellung der wässrigen Dispersion von Polymerteilchen eingesetzt wird. Sie wird durch eine radikalische wässrige Emulsionspolymerisation einer wässrigen Monomeremulsion hergestellt, wobei das Polymerisat in Gegenwart der Monomere M1 und gegebenenfalls M2 und mindestens einer polyalkylenoxid-haltigen Substanz, wie oben und im Folgenden definiert, erhalten wird.

Die Monomere M1 haben in der Regel eine Wasserlöslichkeit in entionisiertem Wasser bei 20 °C und 1 bar von $\leqq$ 50 g/L, insbesondere von $\leqq$ 30 g/L. Die Wasserlöslichkeit der Monomere M1 liegt typischerweise im Bereich von 0,1 bis 30 g/l (20 °C, 1 bar).

Die Monomeren M1 sind nicht-ionisch, d. h. neutral. Sie werden im Wässrigen weder protoniert noch wirken sie als Säure.

Die Monomeren M1 sind monoethylenisch ungesättigt, d. h. sie weisen genau eine ethylenisch ungesättigte C=C-Doppelbindung auf. Die Monomere M1 sind vorzugsweise ausgewählt unter Estern monoethylenisch ungesättigter $C_3$-$C_8$-Monocarbonsäuren mit $C_1$-$C_{10}$-Alkanolen, Estern monoethylenisch ungesättigter $C_4$-$C_8$-Dicarbonsäuren mit $C_1$-$C_{10}$-Alkanolen, Estern von Vinyl- oder Allylalkohol mit $C_1$-$C_{30}$-Monocarbonsäuren, Vinylaromaten, Amiden und Diamiden, monoethylenisch ungesättigter $C_3$-$C_8$-Monocarbonsäuren mit $C_1$-$C_{10}$-Alkylaminen, $C_4$-$C_8$-Dicarbonsäuren mit Di-$C_1$-$C_{10}$-alkylaminen und deren Gemischen, bevorzugt Estern monoethylenisch ungesättigter $C_3$-$C_8$-Monocarbonsäuren mit $C_1$-$C_{10}$-Alkanolen, Estern monoethylenisch ungesättigter $C_4$-$C_8$-Dicarbonsäuren mit $C_1$-$C_{10}$-Alkanolen und deren Gemischen.

Geeignete Ester und Diester monoethylenisch ungesättigter $C_3$-$C_8$-Mono- und $C_4$-$C_8$-Dicarbonsäuren mit $C_1$-$C_{30}$-Alkanolen, insbesondere mit $C_1$-$C_{10}$-Alkanolen, sind vor allem die Ester monoethylenisch ungesättigter $C_3$-$C_8$-Monocarbonsäuren, insbesondere die Ester der Acrylsäure und die Ester der Methacrylsäure mit $C_1$-$C_{30}$-Alkanolen, insbesondere mit $C_1$-$C_{10}$-Alkanolen, wie Methyl(meth)acrylat, Methylethacrylat, Ethyl(meth)acrylat, Ethylethacrylat, n-Propyl(meth)acrylat, Isopropyl(meth)acrylat, n-Butyl(meth)acrylat, sec.-Butyl(meth)acrylat, tert.-Butyl(meth)acrylat, tert.-Butylethacrylat, n-Hexyl(meth)acrylat, n-Heptyl(meth)acrylat, n-Octyl(meth)acrylat, 1,1,3,3-Tetramethylbutyl(meth)acrylat, Ethylhexyl(meth)acrylat, n-Nonyl(meth)acrylat, n-Decyl(meth)acrylat, n-Undecyl(meth)acrylat, Tridecyl(meth)acrylat, Myristyl(meth)-acrylat, Pentadecyl(meth)acrylat, Palmityl(meth)acrylat, Heptadecyl(meth)acrylat, Nonadecyl(meth)acrylat, Arachinyl(meth)acrylat, Behenyl(meth)acrylat, Lignoceryl-(meth)acrylat, Cerotinyl(meth)acrylat, Melissinyl(meth)acrylat, Palmitoleinyl(meth)-acrylat, Oleyl(meth)acrylat, Linolyl(meth)acrylat, Linolenyl(meth)acrylat, Stearyl(meth-)acrylat und Lauryl(meth)acrylat, aber auch die Diester monoethylenisch ungesättigter $C_4$-$C_8$-Dicarbonsäuren, insbesondere die Diester der Maleinsäure mit $C_1$-$C_{30}$-Alkanolen wie Dimethylmaleat, Diethylmaleat, Di-(n-propyl)-maleat, Diisopropylmaleat, Di-(n-butyl)-maleat, Di-(n-hexyl)-maleat, Di-(1,1,3,3-tetramethylbutyl)-maleat, Di-(n-nonyl)-maleat, Ditridecylmaleat, Dimyristylmaleat, Dipentadecylmaleat, Dipalmitylmaleat, Diarachinylmaleat und Mischungen davon. Der Begriff "(meth)acrylat" umfasst dabei sowohl den entsprechenden Ester der Acrylsäure wie auch den entsprechenden Ester der Methacrylsäure.

Geeignete Ester von Vinylalkohol und Allylalkohol mit $C_1$-$C_{30}$-Monocarbonsäuren sind z. B. Vinylformiat, Vinylacetat, Vinylpropionat, Vinylbutyrat, Vinyllaurat, Vinylstearat, Versaticsäurevinylester, Allylformiat, Allylacetat, Allylpropionat, Allylbutyrat, Allyllaurat, Vinylmethyacrylat, Allylmethacrylat, Vinylacrylat, Allylacrylat und Mischungen davon.

Geeignete Vinylaromaten sind Styrol, 2-Methylstyrol, 4-Methylstyrol, 2-(n-Butyl)styrol, 4-(n-Butyl)styrol, 4-(n-Decyl)styrol, insbesondere Styrol.

Geeignete Amide und Diamide monoethylenisch ungesättigter $C_3$-$C_8$-Mono- und $C_4$-$C_8$-Dicarbonsäuren mit $C_1$-$C_{30}$-Alkylaminen oder Di-$C_1$-$C_{30}$-alkylaminen, insbesondere mit $C_1$-$C_{10}$-Alkylaminen oder Di-$C_1$-$C_{10}$-alkylaminen, sind vor allem die Amide der Acrylsäure und der Methacrylsäure mit $C_1$-$C_{30}$-Alkylaminen oder Di-$C_1$-$C_{30}$-alkylaminen, insbesondere mit $C_1$-$C_{10}$-Alkylaminen oder Di-$C_1$-$C_{10}$-alkylaminen, wie z. B. N-Methyl(meth)acrylamid, N-Ethyl(meth)acrylamid, N-Propyl(meth)acrylamid, N-(n-Butyl)(meth)acrylamid, N-(tert.-Butyl)(meth)acrylamid, N-(n-Octyl)(meth)acrylamid, N-(1,1,3,3-Tetramethylbutyl)(meth)acrylamid, N-Ethylhexyl(meth)acrylamid, N-(n-Nonyl)(meth)acrylamid, N-(n-Decyl)(meth)acrylamid, N-(n-Undecyl)(meth)acrylamid, N-Tridecyl(meth)acrylamid, N-Myristyl(meth)acrylamid, N-Pentadecyl(meth)acrylamid, N-Palmityl(meth)acrylamid, N-Heptadecyl(meth)acrylamid, N-Nonadecyl(meth)acrylamid, N-Arachinyl(meth)acrylamid, N-Behenyl(meth)acrylamid, N-Lignoceryl(meth)acrylamid, N-Cerotinyl(meth)acrylamid, N-Melissinyl(meth)acrylamid, N-Palmitoleinyl(meth)acrylamid, N-Oleyl(meth)acrylamid, N-Linolyl(meth)acrylamid, N-Linolenyl(meth)acrylamid, N-Stearyl(meth)acrylamid, N-Lauryl(meth)acrylamid, N,N-Dimethyl(meth)acrylamid, N,N-Diethyl(meth)acrylamid, aber auch die Diamide und Imide der Maleinsäure mit $C_1$-$C_{30}$-Alkylaminen oder Di-$C_1$-$C_{30}$-alkylaminen, insbesondere mit $C_1$-$C_{10}$-Alkylaminen oder Di-$C_1$-$C_{10}$-alkylaminen, wie z. B. N,N'-Dimethylmaleinsäurediamid, N,N'-Diethylmaleinsäurediamid, N,N'-Dipropylmaleinsäurediamid, N,N'-Di-(tert.-butyl)-maleinsäurediamid, N,N'-Di-(n-octyl)-maleinsäurediamid, N,N'-Di-(n-nonyl)-maleinsäurediamid, N,N'-Ditridecylmaleinsäurediamid, N,N'-Dimyristylmaleinsäurediamid, N,N,N',N'-Tetramethylmaleinsäurediamid, N,N,N',N'-Tetraethylmaleinsäurediamid und Mischungen davon. Der Begriff "(meth)acrylamid" umfasst dabei sowohl das entsprechende Amid der Acrylsäure wie auch das entsprechende Amid der Methacrylsäure.

Weitere geeignete Monomere M1 sind beispielsweise Vinylhalogenide, Vinylidenhalogenide und Mischungen davon.

Geeignete Vinylhalogenide und Vinylidenhalogenide sind Vinylchlorid, Vinylidenchlorid, Vinylfluorid, Vinylidenfluorid und Mischungen davon.

Vorzugsweise ist das mindestens ein Monomer M1 ausgewählt unter Estern monoethylenisch ungesättigter $C_3$-$C_8$-Monocarbonsäuren, insbesondere Estern der Acrylsäure mit $C_1$-$C_6$-Alkanolen, Estern der Methacrylsäure mit $C_1$-$C_6$-Alkanolen und deren Gemischen.

Bevorzugt ist das mindestens ein Monomer M1 ausgewählt unter Methylacrylat, Ethylacrylat, n-Butylacrylat, tert.-Butylacrylat, 2-Ethylhexylacrylat, Methylmethacrylat, tert.-Butylmethacrylat und Mischungen davon.

Speziell ist das mindestens ein Monomer M1 Methylmethacrylat.

Erfindungsgemäß liegt der Anteil der Monomere M1, bezogen auf das Gesamtgewicht der in Schritt i) eingesetzten Monomere und der polyalkylenoxid-haltigen Substanz im Bereich von 25,0 bis 99,9 Gew.-%, insbesondere im Bereich von 50,0 bis 79,9 Gew.-% und besonders bevorzugt im Bereich von 60,0 bis 75,0 Gew.-%.

Die Monomeren M2 sind ausgewählt unter Monomeren M2a, die wenigstens eine anionische oder anionogene Gruppe tragen und neutralen Monomeren M2b, die eine Wasserlöslichkeit von > 50 g/L bei 20 °C aufweisen, und deren Gemischen.

Die Monomere M2a weisen in der Regel eine anionische oder anionogene Gruppe auf.

Eine erste Gruppe M2a1 der Monomere M2a sind ethylenisch ungesättigte Fettsäuren, insbesondere solche Fettsäuren mit 10 bis 24 Kohlenstoffatomen und 1 bis 4 Doppelbindungen im Molekül. Hierzu zählen Leinölfettsäuren und ungesättigte Fettsäuren

Geeignete Fettsäuren sind ausgewählt unter Rizinolsäure, Palmitoleinsäure, Elaidinsäure, Vaccensäure, Icosensäure, Cetoleinsäure, Erucasäure, Nervonsäure, Arachidonsäure, Timnodonsäure, Clupanodonsäure.

Eine zweite Gruppe M2a2 der Monomeren M2a sind monoethylenisch ungesättigt, d. h. sie weisen genau eine ethylenisch ungesättigte C=C-Doppelbindung auf.

Die Monomeren M2a2 sind ausgewählt unter monoethylenisch ungesättigten Monomeren mit wenigstens einer Carboxylatgruppe.

Monomere M2a2 sind vorzugsweise ausgewählt unter monoethylenisch ungesättigten $C_3$-$C_8$-Monocarbonsäuren, monoethylenisch ungesättigten $C_4$-$C_8$-Dicarbonsäuren und deren Salze, Anhydride oder Methylhalbester, monoethylenisch ungesättigten $C_5$-$C_8$-Tricarbonsäuren und deren Salze, Anhydride oder deren Monomethylester und Gemische davon.

Geeignete monoethylenisch ungesättigte $C_3$-$C_8$-Monocarbonsäuren sind ausgewählt unter Acrylsäure, Methacrylsäure, Acryloxypropionsäure, Methacryloxypropionsäure, Acryloxyessigsäure, Methacryloxyessigsäure, Crotonsäure sowie deren Salze, Anhydride und Gemische davon.

Besonders bevorzugt sind Acrylsäure, Methacrylsäure und Gemische davon.

Geeignete monoethylenisch ungesättigten $C_4$-$C_8$-Dicarbonsäuren sind ausgewählt unter Maleinsäure, Fumarsäure, Itaconsäure sowie deren Salze, Anhydride deren Monomethylester und Gemische davon.

Geeignete monoethylenisch ungesättigten $C_5$-$C_8$-Tricarbonsäuren sind ausgewählt unter Aconitsäure und deren Salze, Anhydride oder deren Monomethylester und Gemische davon.

Die Monomere M2b sind in der Regel neutral und haben in der Regel eine Wasserlöslichkeit in entionisiertem Wasser bei 20 °C und 1 bar von > 50 g/L, insbesondere von > 70 g/L (20 °C, 1 bar), bevorzugt > 80 g/L.

Die Monomere M2b sind monoethylenisch ungesättigt, d. h. sie weisen genau eine ethylenisch ungesättigte C=C-Doppelbindung auf.

Die Monomere M2b sind ausgewählt unter monoethylenisch ungesättigten Monomeren mit wenigstens einer Carbonsäureamidgruppe.

Die Monomere M2b sind beispielsweise primäre Amide monoethylenisch ungesättigter $C_3$-$C_8$-Monocarbonsäuren und deren Gemischen.

Geeignete primäre Amide monoethylenisch ungesättigter $C_3$-$C_8$-Monocarbonsäuren sind ausgewählt unter Acrylamid, Methacrylamid und Gemischen davon.

Bevorzugt ist das Monomer M2 ausgewählt unter Monomer M2a, insbesondere M2a2.

Insbesondere ist das Monomer M2 ausgewählt unter Acrylsäure, Methacrylsäure und Gemischen davon.

Erfindungsgemäß liegt der Anteil der Monomeren M2, bezogen auf das Gesamtgewicht der in Schritt i) eingesetzten Monomere und der polyalkylenoxid-haltigen Substanz im Bereich von 0 bis 15,0 Gew.-%, insbesondere im Bereich von bevorzugt 0,1 bis 10,0 Gew.-% und besonders bevorzugt im Bereich von 0,5 bis 2,0 Gew.-%.

Polyalkylenoxid steht für einen von gleichen oder verschiedenen $C_2$-$C_4$-Oxyalkylen-Monomerbausteinen abgeleiteten Rest, mit einem Polymerisationsgrad von 2 bis 100, bevorzugt 3 bis 50, besonders 4 bis 25, speziell 5 bis 10.

Die polyalkylenoxid-haltige Substanz ist vorzugsweise ausgewählt unter Polysiloxan-polyalkylenoxid-Copolymere, Copolymere von Propylen-, Butylen- oder Styroloxid und Ethylenoxid, Blockcopolymere von Propylenoxid und Ethylenoxid, Polyalkyenoxid-Poly(meth)acrylat-Copolymere, Polyalklyenoxid-(Poly)alkyl-Copolymere, Poly(alkylenoxid)-Poly((meth)acrylat)-Blockcopolymer, fluorierte Alkylesterpolyalkylenoxide, fluorierte Polyalkoxylate und hochverzweigte Polyaklylenoxide.

Geeignete Polysiloxan-polyalkylenoxid-Copolymere sind insbesondere z. B. Polysiloxan-Polyalkylenoxid-graft-Propfcopolymere, Polysiloxan-Polyalkylenoxid-graft-Copolymere mit $\alpha$-$\omega$-Struktur, Polysiloxan-Polyalkylenoxid-graft-Copolymere mit ABA-Blockstrukturen, Polysiloxan-Polyalkylenoxid-graft-Copolymere mit BAB-Blockstrukturen, Polysiloxan-Polyalkylenoxid-graft-Copolymere mit weiteren Abfolgen von Polyalkylenoxid-Polysiloxan-Blöcken, verzweigte Polysiloxan-Polyalkylenoxid-Copolymere und Polysiloxan-Polyalkylenoxid-graft-Copolymere mit Polyester, (fluorierten-) (Poly-)Alkyl-, Polyacrylat-Seitenketten und Gemischen davon.

Bevorzugt ist die polyalkylenoxid-haltige Substanz ausgewählt unter Polysiloxan-Polyalkylenoxid-graft-Pfropfcopolymeren, Polysiloxan-Polyalkylenoxid-graft-Copolymeren mit $\alpha$-$\omega$-Struktur, insbesondere Polyalkylenoxid-graft-Pfropfcopolymeren.

Geeignete Polysiloxan-Polyalkylenoxid-graft-Pfropfcopolymere sind beispielsweise Polymere der allgemeinen Formel (I):

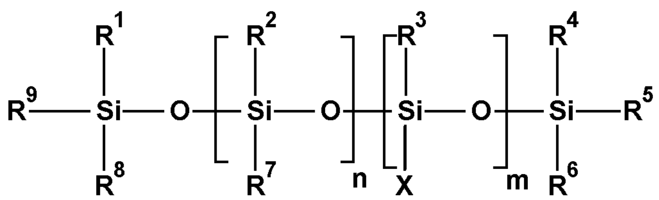

(I),

wobei die Variablen in der Formel (I) die folgenden Bedeutungen aufweisen:

| | |
|---|---|
| $R^1$, $R^2$, $R^3$, $R^4$, $R^5$, $R^6$, $R^7$, $R^8$, $R^9$ | stehen unabhängig voneinander für H, Alkyl, OH, -O-Alkyl, Allyl, -O-Allyl, Phenyl oder Alkylester; bevorzugt stehen $R^1$, $R^2$, $R^3$, $R^4$, $R^5$, $R^6$, $R^7$, $R^8$, $R^9$ unabhängig voneinander für Methyl; |
| n | bedeutet 0 - 1000, bevorzugt für 0 - 500, insbesondere 1 - 100; |
| m | bedeutet 1 - 100, bevorzugt 1 - 50, insbesondere 1 - 10. |
| X | weist die folgende Struktur (Ia) auf: |

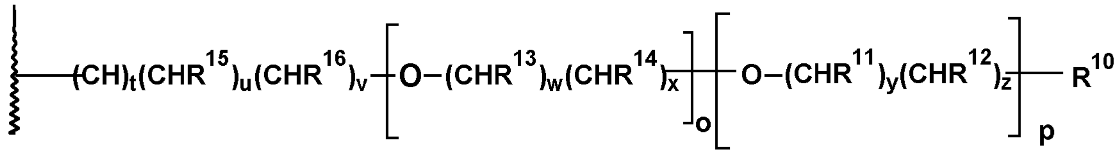

(Ia),

wobei die Variablen in der Formel (Ia) die folgenden Bedeutungen aufweisen:

$R^{10}$ steht für OH, -O-Alkyl, -O-Allyl, O-Phenyl oder einen Alkylester, bevorzugt OH, -O-Methyl oder -O-Butyl;
$R^{11}$, $R^{13}$, $R^{15}$ stehen unabhängig voneinander für H, -Alkyl oder Phenyl, bevorzugt H;
$R^{12}$, $R^{14}$, $R^{16}$ stehen unabhängig voneinander für H, -Alkyl oder Phenyl, bevorzugt H oder Methyl;
o steht für 0 -100 steht, bevorzugt 0 - 50, insbesondere 10 - 40;
p steht für 1 - 100 steht, bevorzugt 0 - 50, insbesondere 10 - 40;
t bedeutet 0 oder 2, bevorzugt 0;
u bedeutet 0 - 10, bevorzugt 0 - 6, insbesondere 3;
v bedeutet 0 - 10, bevorzugt 0 - 6, insbesondere 3;
w, x, y, z stehen unabhängig voneinander für 1 - 10 bedeuten, bevorzugt 1 - 5, insbesondere 1.

Geeignete Polysiloxan-Polyalkylenoxid-graft-Copolymere mit α-ω-Struktur sind beispielsweise Polymere der allgemeinen Formel (II):

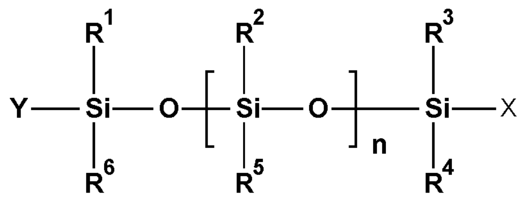

(II),

wobei die Variablen in der Formel (II) die folgenden Bedeutungen aufweisen:

| | |
|---|---|
| $R^1$, $R^2$, $R^3$, $R^4$, $R^5$, $R^6$ | stehen unabhängig voneinander für H, Alkyl, OH, O-Alkyl, Allyl, -O-Allyl, Phenyl oder Alkylester bedeuten, bevorzugt Methyl; |
| n | steht für 0 - 1000, bevorzugt 0 - 500, besonders bevorzugt 1 - 100; |
| X und Y | stehen unabhängig voneinander für die folgende Struktur der Formel (IIa): |

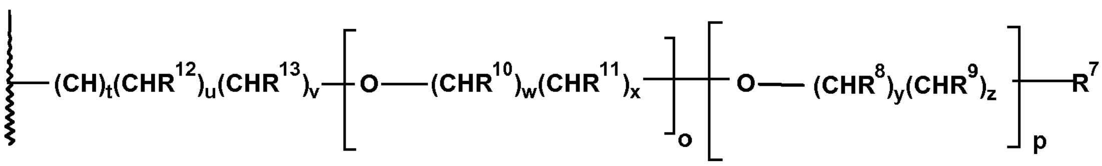

(IIa),

wobei die Variablen in der Formel (IIa) die folgenden Bedeutungen aufweisen:

$R^7$ steht für OH, O-Alkyl, -O-Allyl, O-Phenyl oder einen Alkylester, bevorzugt OH, O-Methyl, oder O-Butyl;
$R^8$, $R^{10}$ und $R^{12}$ stehen unabhängig voneinander für H, Alkyl, oder Phenyl, bevorzugt für H;
$R^9$, $R^{11}$ und $R^{13}$ stehen unabhängig voneinander für H, Alkyl, oder Phenyl, bevorzugt für H oder Methyl;
o steht für 0 - 100, bevorzugt 0 - 50 besonders bevorzugt 10 - 40;
p steht für 1 - 100, bevorzugt 1 -50, besonders bevorzugt 10 - 40;
t steht für 0 oder 2, bevorzugt 0;
u steht für 0-10, bevorzugt 0-6, besonders bevorzugt 3;

v steht für 0-10, bevorzugt 0-6, besonders bevorzugt 0;
w, x, y und z stehen unabhängig voneinander für 1 -10, bevorzugt 1 -5, besonders bevorzugt 1.

Geeignete Polysiloxan-Polyalkylenoxid-graft-Copolymere mit ABA-Blockstrukturen, Polysiloxan-polyalkylenoxid-graft-Copolymere mit BAB-Blockstrukturen oder Polysiloxan-polyalkylenoxid-graft-Copolymere mit weiteren Abfolgen von Polysiloxanpolyalkylenoxid-Blöcken sind z. B. Polymere der allgemeinen Strukturen:
ABA; BAB; ABAB; BABA; ABABA; BABAB, AABB, BBAA; AABBAA, BBAABB
und weitere regelmäßige Abfolgen der Blöcke A und B. Der Block A kann beispielsweise mit folgender allgemeiner Formel (III) beschrieben werden:

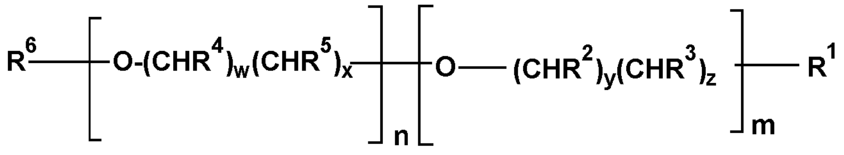

(III),

wobei die Variablen in der Formel (III) die folgenden Bedeutungen aufweisen:
$R^1$ und $R^6$ bezeichnen die Anknüpfungspunkte mit weiteren Blöcken A oder B oderstehen für eine Endgruppe, beispielsweise unabhängig voneinander für H, Alkyl, OH, O-Alkyl, Allyl, -O-Allyl, Phenyl oder Alkylester;

$R^2$ und $R^4$ stehen unabhängig voneinander für H, Alkyl, oder Phenyl, bevorzugt für H; $R^3$ und $R^5$ stehen unabhängig voneinander für H, Alkyl oder Phenyl, bevorzugt für H oder Methyl;
n steht für 0 - 100, bevorzugt 0 - 50;
m steht für 1 - 100, bevorzugt 1 - 50;
w, x, y und z stehen unabhängig voneinander für 1 - 10, bevorzugt 1 - 5, besonders bevorzugt 1.

Der Block B kann beispielsweise mit folgender allgemeiner Formel (IIIa) beschrieben werden:

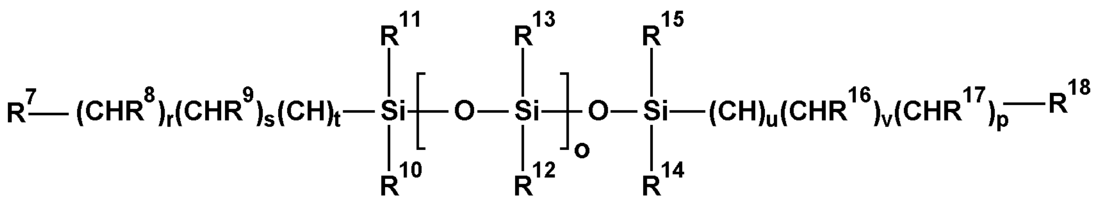

(IIIa),

wobei die Variablen in der Formel (IIIa) die folgenden Bedeutungen aufweisen:

| | |
|---|---|
| $R^7$ und $R^{18}$ | bezeichnen die Anknüpfungspunkte mit weiteren Blöcken A oder B oder stehen für eine Endgruppe, beispielsweise unabhängig voneinander für H, Alkyl, OH, -O-Alkyl, Allyl, -O-Allyl, Phenyl oder einen Alkylester; |
| $R^{10}$, $R^{11}$, $R^{12}$, $R^{13}$, $R^{14}$ und $R^{15}$ | stehen unabhängig voneinander für H, Alkyl, OH, -O-Alkyl, Allyl, -O-Allyl, Phenyl oder einen Alkylester, bevorzugt für Methyl; |
| $R^9$, $R^{16}$ | stehen unabhängig voneinander H, Alkyl, oder Phenyl, bevorzugt für H; |
| $R^8$, $R^{17}$ | stehen unabhängig voneinander H, Alkyl, oder Phenyl, bevorzugt für H oder Methyl; |
| o | steht für 1 - 1000, bevorzugt 1 -100; |
| t und u | stehen für 0 oder 2, bevorzugt 0; |
| s und v | stehen für 0 - 10, bevorzugt 0 - 6, besonders bevorzugt 3; |
| p und r | stehen für 0 - 10, bevorzugt 0 - 6, besonders bevorzugt 0. |

Der Block B kann auch mit folgender allgemeiner Formel (IIIb) beschrieben werden:

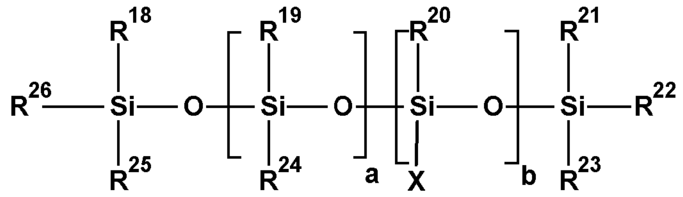

(IIIb),

wobei die Variablen in der Formel (IIIb) die folgenden Bedeutungen aufweisen:

| | |
|---|---|
| $R^{22}$ und $R^{26}$ | bezeichnen die Anknüpfungspunkte mit weiteren Blöcken A oder B oder stehen für eine Endgruppe, beispielsweise unabhängig voneinander für H, Alkyl, OH, -O-Alkyl, Allyl, -O-Allyl, Phenyl oder Alkylester; |
| $R^{18}$, $R^{19}$, $R^{20}$, $R^{21}$, $R^{23}$, $R^{24}$, $R^{25}$ | stehen unabhängig voneinander für H, Alkyl, OH, -O-Alkyl, Allyl, -O-Allyl, Phenyl oder Alkylester, bevorzugt Methyl; |
| a | steht für 0 - 1000, bevorzugt 0 - 500, besonders bevorzugt 1 - 100; |
| b | steht für 1 - 100, bevorzugt 1 - 50, besonders bevorzugt 1-10; |
| X | weist folgende Struktur der Formel (IIIc) auf: |

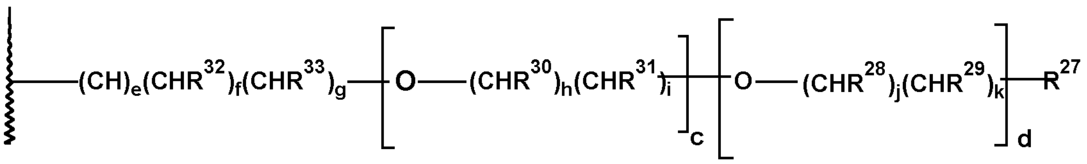

(IIIc),

wobei die Variablen in der Formel (IIIc) die folgenden Bedeutungen aufweisen:

$R^{27}$ steht für OH, -O-Alkyl, -O-Allyl, O-Phenyl oder ein Alkylester, bevorzugt OH, O-Methyl oder O-Butyl;
$R^{28}$, $R^{30}$ und $R^{32}$ stehen unabhängig voneinander H, Alkyl, oder Phenyl bevorzugt H;
$R^{29}$, $R^{31}$ und $R^{33}$ stehen unabhängig voneinander H, Alkyl, oder Phenyl bevorzugt H oder Methyl;
c steht für 0 - 100, bevorzugt 0 - 50, besonders bevorzugt 10-40;
d steht für 1 - 100, bevorzugt 1 - 50, besonders bevorzugt 10-40;
e steht für 0 oder 2, bevorzugt 0;
f steht für 0 - 10, bevorzugt 0-6, besonders bevorzugt 3;
g steht für 0 - 1, bevorzugt 0 - 6, besonders bevorzugt 0;
h, i, j und k stehen unabhängig voneinander für 1 - 10, bevorzugt 1 - 5, besonders bevorzugt 1.

Geeignete verzweigten Polysiloxan-Polyalkylenoxid-graft-Copolymere sind beispielsweise Polymere der allgemeinen Formel (IV) oder (IVa):

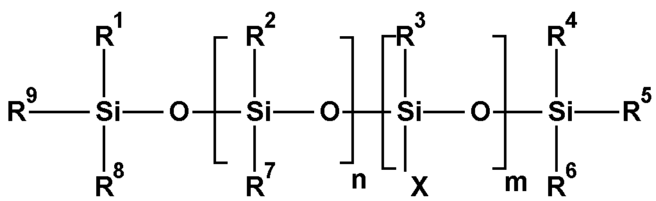

(IV)

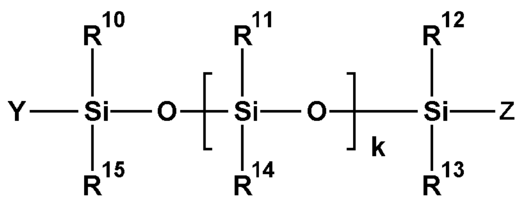

(IVa),

wobei, die Variablen in der Formel (IV) und (IVa) die folgenden Bedeutungen aufweisen:

$R^1$, $R^2$, $R^3$, $R^4$, $R^5$, $R^6$, $R^7$, $R^8$, $R^9$, $R^{10}$, $R^{11}$, $R^{12}$, $R^{13}$, $R^{14}$, $R^{15}$ stehen unabhängig voneinander für H, Alkyl, OH, -O-Alkyl, Allyl, -O-Allyl, Phenyl oder Alkylester, bevorzugt Methyl, unter der Voraussetzung, dass mindestens einer der Reste $R^1$ bis $R^{15}$ folgende Struktur der Formeln (IVb), (IVc), (IVd), (IVe), (IVf) oder (IVg) hat:

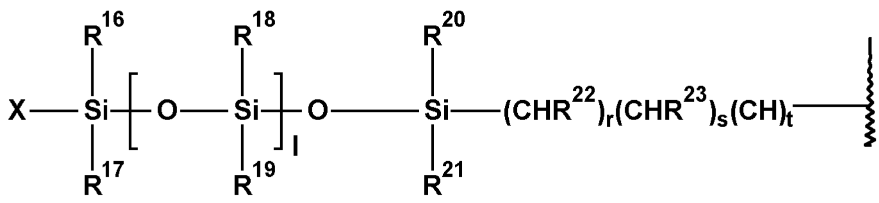

(IVb),

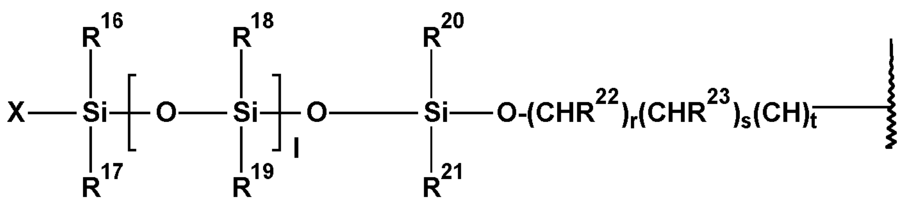

(IVc),

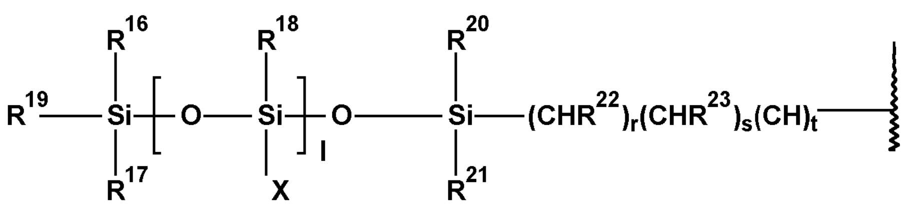

(IVd),

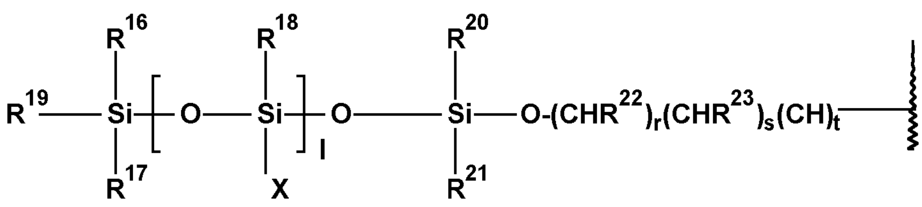

(IVe),

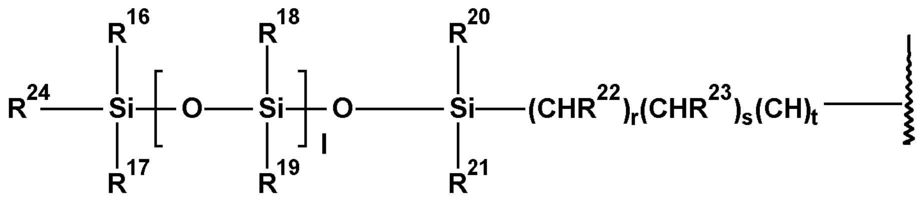

(IVf)

oder

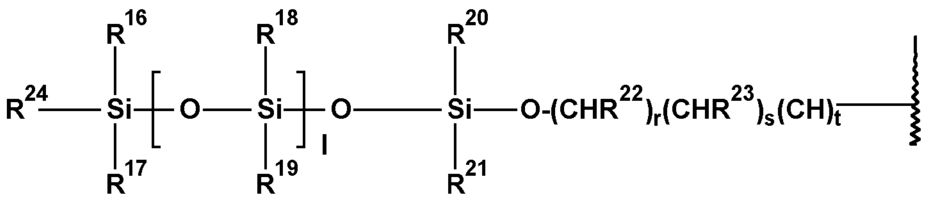

(IVg),

wobei die Variablen in der Formel (IVb), (IVc), (IVd), (IVe), (IVf), (IVg) die folgenden Bedeutungen aufweisen:

| | |
|---|---|
| $R^{16}$, $R^{17}$, $R^{18}$, $R^{19}$, $R^{20}$, $R^{21}$ und $R^{24}$ | stehen unabhängig voneinander für H, Alkyl, OH, -O-Alkyl, Allyl, -O-Allyl, Phenyl oder Alkylester, bevorzugt Methyl; |
| $R^{23}$ | steht für H, Alkyl oder Phenyl, bevorzugt H; |
| $R^{22}$ | steht für H, Alkyl oder Phenyl, bevorzugt H oder Methyl; |
| t | steht für 0 oder 2, bevorzugt 0; |
| s | steht für 0 - 10, bevorzugt 0-6, besonders bevorzugt 3; |
| r | steht für 0 - 10, bevorzugt 0-6, besonders bevorzug 0; |
| l | steht für 1 - 100, bevorzugt 1 - 50, besonders bevorzugt 1 - 10; |
| X ,Y und Z | stehen unabhängig voneinander für folgende Formel (IVh): |

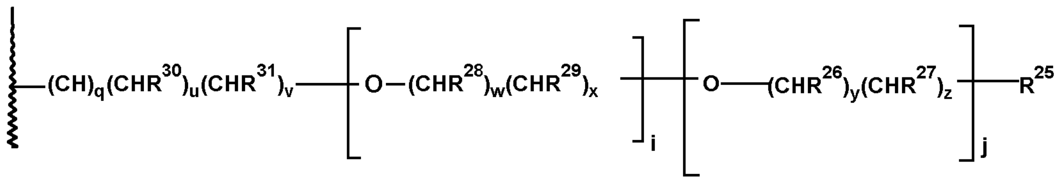

(IVh),

wobei die Variablen in der Formel (IVh) die folgenden Bedeutungen aufweisen:

| | |
|---|---|
| $R^{25}$ | steht für OH, -O-Alkyl, -O-Allyl, O-Phenyl oder Alkylester, bevorzugt OH, O-Methyl oder O-Butyl; |
| $R^{26}$, $R^{28}$, $R^{30}$ | stehen unabhängig voneinander für H, Alkyl, oder Phenyl, bevorzugt H; |
| $R^{27}$, $R^{29}$, $R^{31}$ | stehen unabhängig voneinander für H, Alkyl, oder Phenyl, bevorzugt H oder Methyl; |
| i | steht für 0 - 100, bevorzugt 0 - 50, besonders bevorzugt 10-40; |
| j | steht für 1 - 100, bevorzugt 1 - 50, besonders bevorzugt 10-40; |
| q | steht für 0 oder 2, bevorzugt 0; |
| u | steht für 0 - 10, bevorzugt 0 - 6, besonders bevorzugt 3; |
| v | steht für 0 - 10, bevorzugt, 0-6 besonders bevorzugt 0; |
| w, x, y und z | stehen unabhängig voneinander für 1 - 10, bevorzugt 1 -5, besonders bevorzugt 1; |
| n | steht für 0 - 1000, bevorzugt 0 - 500, besonders bevorzugt 1 - 100; |
| k | steht für 0 - 1000, bevorzugt 0-500, besonders bevorzugt 1 - 100; |
| m | steht für 1 - 100, bevorzugt 1 - 50, besonders bevorzugt 1 -10. |

Geeignete Polysiloxan-polyalkylenoxid-graft-Copolymere mit Polyester, (fluorierten-) (Poly-)Alkyl-, Polyacrylat-Seitenketten sind beispielsweise Polymere der Formel (V)

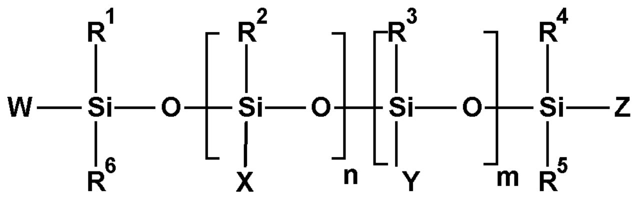

(V),

wobei
W, X, Y, Z unabhängig voneinander die folgende Struktur (Va) bedeuten:

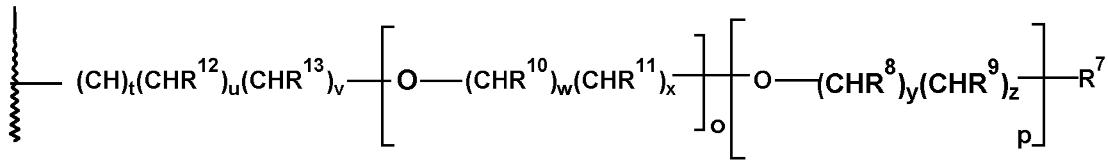

(Va),

wobei die Variablen in der Formel (V) und (Va) die folgenden Bedeutungen aufweisen:

| | |
|---|---|
| $R^7$ | steht für OH, -O-Alkyl, -O-Allyl, O-Phenyl oder einen Alkylester, bevorzugt OH, O-Methyl oder O-Butyl; |
| $R^8$, $R^{10}$, $R^{12}$ | stehen unabhängig voneinander für H, Alkyl oder Phenyl, bevorzugt H; |
| $R^9$, $R^{11}$, $R^{13}$ | stehen unabhängig voneinander für H, Alkyl oder Phenyl, bevorzugt Methyl; |
| o | steht für 0 bis 100, bevorzugt 0 - 50, insbesondere 10 - 40; |
| p | steht für 1 bis 100, bevorzugt 0 - 50, insbesondere 10 - 40; |
| t | steht für 0 oder 2, bevorzugt 0; |
| u | steht für 0 - 10, bevorzugt 0 - 6, insbesondere 3; |
| v | steht für 0 - 10, bevorzugt 0 - 6, insbesondere 0; |
| w, x, y, z | bedeuten unabhängig voneinander 1 - 10, bevorzugt 1 - 5, insbesondere 1; |

oder

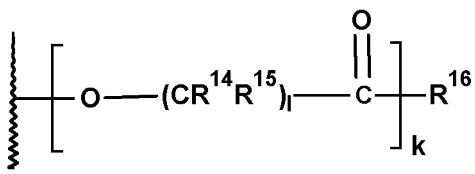

(Vb),

wobei die Variablen in der Formel (Vb) die folgenden Bedeutungen aufweisen:

| | |
|---|---|
| $R^{14}$, $R^{15}$ und $R^{16}$ | stehen unabhängig voneinander für H, Alkyl, OH, -O-Alkyl, Allyl, -O-Allyl, |
| l | steht für 1 - 20, |
| k | steht für 1 - 1000, |

oder

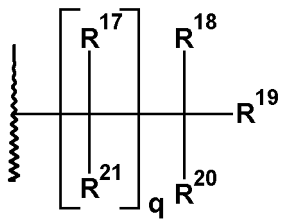

(Vc),

wobei die Variablen in der Formel (Vc) die folgenden Bedeutungen aufweisen:

| | |
|---|---|
| $R^{17}$, $R^{18}$, $R^{19}$, $R^{20}$ und $R^{21}$ | stehen unabhängig voneinander für H, F, Alkyl, OH, -O-Alkyl, Allyl, -O-Allyl; |
| q | steht für 1 - 1000, bevorzugt 1 - 100, besonders bevorzugt 1 - 20; |

oder

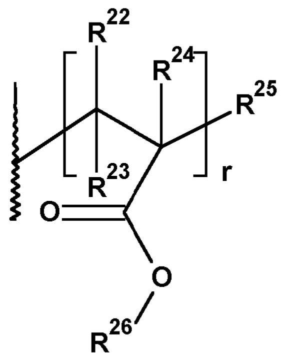

(Vd),

wobei die Variablen in der Formel (Vd) die folgenden Bedeutungen aufweisen:

$R^{22}$ und $R^{23}$ stehen unabhängig voneinander für H oder F;
$R^{24}$ steht für H, F oder Methyl;
$R^{25}$ steht für H, oder F oder Alkyl, OH, -O-Alkyl, Allyl, -O-Allyl, oder (Poly)alkylenoxid ($-(CR^{27}H-CH_2-O-)_s-R^{28}$);
$R^{26}$ steht für H, Alkyl, Allyl oder Poly)alkylenoxid ($-(CR^{27}H-CH_2-O-)_s-R^{28}$
r steht für 1 - 1000;
s steht für 1 - 1000;
$R^{27}$ und $R^{28}$ stehen unabhängig voneinander für H, Alkyl, OH, -O-Alkyl, Allyl, -O-Allyl, bevorzugt H oder Methyl;
$R^1$, $R^2$, $R^3$, $R^4$, $R^5$ und $R^6$ bezeichnen die Anknüpfungspunkte zu der Struktur (Ve) oder stehen unabhängig voneinander für H, Alkyl, OH, -O-Alkyl, Allyl, -O-Allyl;

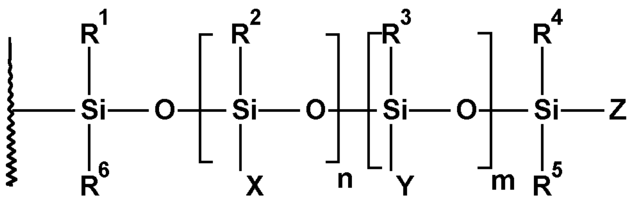

(Ve),

wobei

| | |
|---|---|
| $R^1$, $R^2$, $R^3$, $R^4$, $R^5$, $R^6$, X, Y und Z | die gleiche Definition wie in der Überstruktur der Formel (V) aufweisen; |
| n | steht für 0 - 1000, bevorzugt 0 - 500, besonders bevorzugt 1 -100; |
| m | steht für 1 - 100, bevorzugt 1 - 50, besonders bevorzugt 1 -10. |

Geeignete Copolymeren von Propylen-, Butylen oder Styroloxid und Ethylenoxid sind beispielsweise Polymere der allgemeinen Formel (VI):

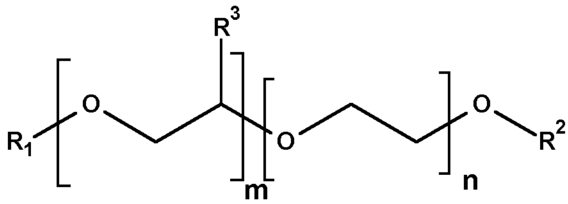

(VI),

wobei die Variablen in der Formel (VI) die folgenden Bedeutungen aufweisen:

$R^1$ steht für H, Alkyl, Allyl oder Alkylester, bevorzugt H oder Alkyl, besonders bevorzugt H;
$R^2$ steht für H, Alkyl, Allyl oder Alkylester, bevorzugt H oder Alkyl, besonders bevorzug Alkyl;
$R^3$ steht für H, Methyl, Ethyl oder Phenyl, bevorzug Methyl;
n, m stehen unabhängig voneinander für 1 - 1000, bevorzugt 1 -50, besonders bevorzugt 1 -5.

Geeignete Blockcopolymere von Propylenoxid und Ethylenoxid sind beispielsweise solche Polymere der allgemeinen Struktur:
AB; BA; ABA; BAB; ABAB; BABA; ABABA; BABAB, AABB, BBAA; AABBAA, BBAABB und weitere regelmäßige Abfolgen der Blöcke A und B.

Der Block A weist beispielsweise die allgemeine Formel (VII) auf:

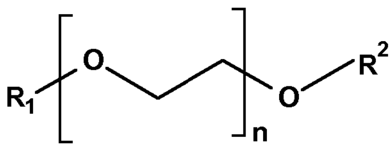

(VII),

wobei die Variablen in der Formel (VII) die folgenden Bedeutungen aufweisen:

$R^1$, $R^2$ bezeichnen die Anknüpfungspunkte mit weiteren Blöcken A und B oder stehen für eine Endgruppe beispielsweise unabhängig voneinander für H, OH, Alkyl, Allyl, oder Alkylester;
n steht für 0 - 1000, bevorzugt 1 - 50, besonders bevorzugt 1 - 5;

wobei der Block B die allgemeine Formel (VIIa) aufweist

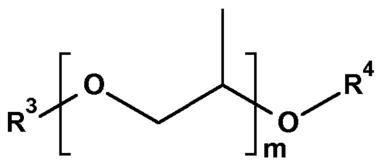

(VIIa),

wobei die Variablen in der Formel (VIIa) die folgenden Bedeutungen aufweisen:

$R^3$, $R^4$ bezeichnen die Anknüpfungspunkte mit weiteren Blöcken A und B oder stehen für eine Endgruppe beispielsweise unabhängig voneinander für H, Alkyl, OH, Allyl oder Alkylester;
m steht für 0 - 1000, bevorzugt 1 - 50, besonders bevorzugt 1 - 5.

Geeignete Polyalkylenoxid-Poly(meth)acrylat-Copolymere sind beispielsweise Polymere der allgemeinen Formel (VIII):

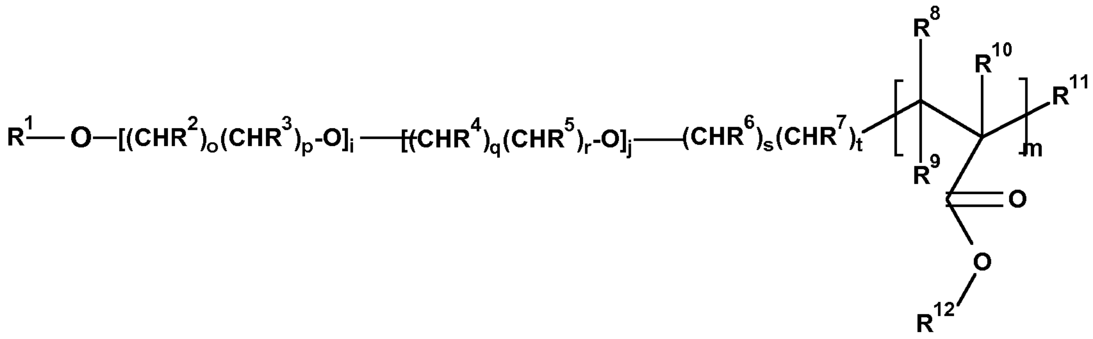

(VIII),

wobei die Variablen in der Formel (VIII) die folgenden Bedeutungen aufweisen:

| | |
|---|---|
| $R^1$, $R^2$, $R^3$, $R^4$, $R^5$, $R^6$, $R^7$ | stehen unabhängig voneinander für H, Alkyl, OH, O-Alkyl, Allyl, O-Allyl, oder Alkylester; |
| i, m | stehen unabhängig voneinander für 1 - 1000; |
| j | steht für 0 - 1000; |
| s, t | stehen unabhängig voneinander für 0 - 10, bevorzugt 0 - 6; |
| o, p, q, r | stehen unabhängig voneinander für 1 - 10, bevorzugt 1 - 5, besonders bevorzugt 1; |
| $R^8$, $R^9$ | stehen unabhängig voneinander für H oder F; |
| $R^{10}$ | steht für H, F, oder Methyl; |
| $R^{11}$ | steht für H, F, Alkyl, OH, -O-Alkyl, Allyl, -O-Allyl oder (Poly)alkylenoxid $-(CR^{13}H-CH_2-O-)_n-R^{14}$, |
| $R^{12}$ | steht für H, Alkyl, Allyl oder (Poly)alkylenoxid $-(CR^{13}H-CH_2-O-)_n-R^{14}$, |
| n | steht für 1 - 1000, |
| $R^{13}$, $R^{14}$ | stehen unabhängig voneinander für H, Alkyl, OH, -O-Alkyl, Allyl, -O-Allyl, bevorzugt H, OH, Methyl, Ethyl. |

Geeignete Poly(alkylenoxid)-Poly((meth)acrylat)-Blockcopolymer sind beispielsweise Polymere der allgemeinen Struktur
ABA; BAB; ABAB; BABA; ABABA; BABAB, AABB, BBAA; AABBAA, BBAABB und weitere regelmäßige Abfolgen der Blöcke A und B.

Der Block A kann beispielsweise für die allgemeine Formel (IX) stehen

$$R^1-(CHR^2)_u(CHR^3)_v-O-[CHR^4)_o(CHR^5)_p-O-]_i-[CHR^6)_q(CHR^7)_r-O-]_j-(CHR^8)_s(CHR^9)_t-R^{10} \quad (IX),$$

wobei die Variablen in der Formel (IX) die folgenden Bedeutungen aufweisen:

$R^1$, $R^2$, $R^3$, $R^4$, $R^5$, $R^6$, $R^7$, $R^8$, $R^9$, $R^{10}$ bezeichnen die Anknüpfungspunkte mit weiteren Blöcken A und B oder stehen für eine Endgruppe beispielsweise unabhängig voneinander für H, Alkyl, OH, -O-Alkyl, Allyl, -O-Allyl;
i, j stehen unabhängig voneinander für 0 - 1000;
s, t, u, v stehen unabhängig voneinander für 0 - 10, bevorzugt 0 - 6;
o, p, q, r stehen unabhängig voneinander für 1 - 10, bevorzugt 1 - 5, besonders bevorzugt 1; wobei der Block B beispielsweise die allgemeine Formel (IXa) aufweist:

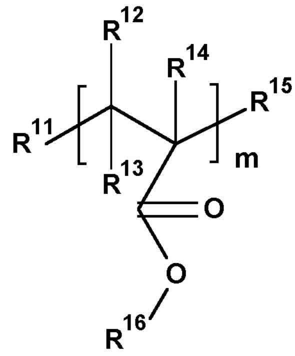

(IXa),

wobei die Variablen in der Formel (IXa) die folgenden Bedeutungen aufweisen:

| | |
|---|---|
| $R^{12}$, $R^{13}$ | stehen unabhängig voneinander für H oder F; |
| $R^{14}$ | steht für H, F oder Methyl; |
| $R^{11}$, $R^{15}$ | bezeichnen die Anknüpfungspunkte mit weiteren Blöcken A und B oder stehen für eine Endgruppe beispielsweise unabhängig voneinander für H, F, Alkyl, OH, -O-Alkyl, Allyl oder -O-Allyl; |
| $R^{16}$ | steht für H, Alkyl, Allyl oder (Poly)alkylenoxid $-(CR_{17}H-CH_2-O-)_n-R^{18}$ |
| n | steht für 1 -1000, |
| $R^{17}$, $R^{18}$ | stehen unabhängig voneinander für H, Alkyl, OH, -O-Alkyl, Allyl oder -O-Allyl, bevorzugt Methyl, Ethyl oder OH; |
| m | steht für 1 - 1000. |

Geeignete Polyalkylenoxid-(Poly)alkyl-Copolymeren sind beispielsweise Polymere der allgemeinen Formel (X):

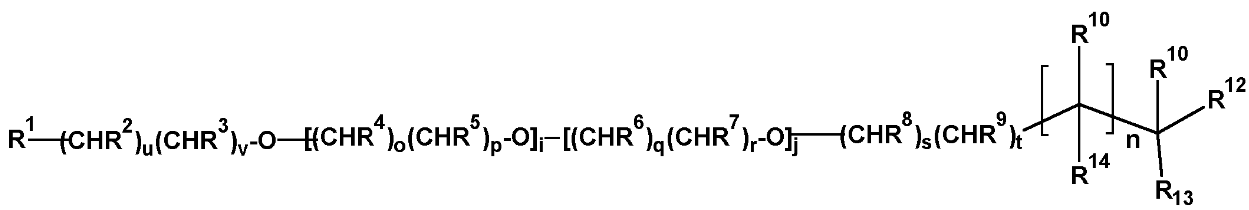

(X)

wobei die Variablen in der Formel (X) die folgenden Bedeutungen aufweisen:

| | |
|---|---|
| $R^1$, $R^2$, $R^3$, $R^4$, $R^5$, $R^6$, $R^7$, $R^8$, $R^9$ | stehen unabhängig voneinander für H, Alkyl, OH, -O-Alkyl, Allyl oder -O-Allyl oder Alkylester; |
| i, n | stehen unabhängig voneinander für 1 -1000; |
| j | steht für 0 - 1000; |
| s, t, u, v | stehen unabhängig voneinander für 0 - 10, bevorzugt 0 - 6; |
| o, p, q, r | stehen unabhängig voneinander 1 - 10, bevorzugt 1 - 5, besonders bevorzugt 1; |
| $R^{10}$, $R^{11}$, $R^{12}$, $R^{13}$, $R^{14}$ | stehen unabhängig voneinander für H, F, Alkyl, OH, -O-Alkyl, Allyl oder -O-Allyl. |

Geeignete (fluorierten-)Alkylester-Polyalkylenoxid-Copolymeren sind beispielsweise Polymere der allgemeinen Formel (XI):

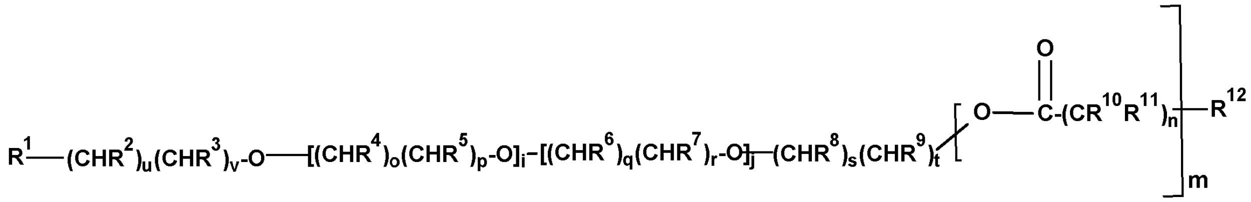

(XI)

wobei die Variablen in der Formel (XI) die folgenden Bedeutungen aufweisen:

$R^1$, $R^2$, $R^3$, $R^4$, $R^5$, $R^6$, $R^7$, $R^8$, $R^9$ stehen unabhängig voneinander für H, Alkyl, OH, - O-Alkyl, Allyl oder -O-Allyl oder Alkylester;
i steht für 1 - 1000;
j steht für 0 - 1000;
s, t, u, v stehen unabhängig voneinander für 0 - 20, bevorzugt 0 - 12;
o, p, q, r stehen unabhängig voneinander für 1 - 10, bevorzugt 1 - 5, besonders bevorzugt 1;
$R^{10}$ $R^{11}$, $R^{12}$ stehen unabhängig voneinander für H, F, Alkyl, OH, -O-Alkyl, Allyl oder -O-Allyl;
n steht für 1 - 20;
m steht für 1 - 1000.

Unter hochverzweigten Polyalkylenoxiden versteht man beispielsweise Polymere wie sie in EP 1 141 083, in DE 102 1 1 664, in WO 00/56802, in WO 03/062306, in WO 96/19537, in WO 03/54204, in WO 03/93343, in WO 05/037893, in WO 04/020503, in DE 10 2004 026 904, in WO 99/16810, in WO 05/026234 und DE 10 2005 009 166 beschrieben werden.

Erfindungsgemäß liegt der Anteil der polyalkylenoxid-haltigen Substanz, bezogen auf das Gesamtgewicht der in Schritt i) eingesetzten Monomere und der polyalkylenoxid-haltigen Substanz im Bereich von 0,1 bis 60,0 Gew.-%, insbesondere im Bereich von 20,0 bis 40,0 Gew.-% und besonders bevorzugt im Bereich von 24,5 bis 38,0 Gew.-%.

Der Volumenmedian der Teilchengröße des Saatpolymers, bestimmt durch hydrodynamische Fraktionierung, liegt im ungequollenen Zustand im Bereich von 10 bis 100 nm.

<u>Schritt ii):</u>

Die in Schritt i) erhaltene Dispersion des Saatpolymers wird in Schritt ii) zur Herstellung einer wässrigen Dispersion einer Quellsaat eingesetzt. Die Quellsaat wird durch radikalische wässrige Emulsionspolymerisation einer wässrigen Suspoemulsion erhalten, enthaltend mindestens ein nicht-ionischen, monoethylenisch ungesättigten Monomer M3, wie oben und im Folgenden definiert, mindestens ein monoethylenisch ungesättigter Monomer M4, wie oben und im Folgenden definiert, in Gegenwart der in Schritt i) erhaltenen wässrigen Dispersion des Saatpolymers.

Die Monomeren M3 haben in der Regel eine Wasserlöslichkeit in entionisiertem Wasser bei 20 °C und 1 bar von $\geqq$ 50 g/L, insbesondere von $\geqq$ 30 g/L. Die Wasserlöslichkeit der Monomere M3 liegt typischerweise im Bereich von 0,1 bis 30 g/l (20 °C, 1 bar).

Die Monomeren M3 sind nicht-ionisch, d. h. neutral. Sie werden im Wässrigen weder protoniert noch wirken sie als Säure.

Die Monomeren M3 sind monoethylenisch ungesättigt, d. h. sie weisen genau eine ethylenisch ungesättigte C=C-Doppelbindung auf. Die Monomere M3 sind vorzugsweise ausgewählt unter Estern monoethylenisch ungesättigter $C_3$-$C_8$-Monocarbonsäuren mit $C_1$-$C_{10}$-Alkanolen, Estern monoethylenisch ungesättigter $C_4$-$C_8$-Dicarbonsäuren mit $C_1$-$C_{10}$-Alkanolen, Estern von Vinyl- oder Allylalkohol mit $C_1$-$C_{30}$-Monocarbonsäuren, Vinylaromaten, Amiden und Diamiden, monoethylenisch ungesättigter $C_3$-$C_8$-Monocarbonsäuren mit $C_1$-$C_{10}$-Alkylaminen, $C_4$-$C_8$-Dicarbonsäuren mit Di-$C_1$-$C_{10}$-alkylaminen und deren Gemischen, bevorzugt Estern monoethylenisch ungesättigter $C_3$-$C_8$-Monocarbonsäuren mit $C_1$-$C_{10}$-Alkanolen, Estern monoethylenisch ungesättigter $C_4$-$C_8$-Dicarbonsäuren mit $C_1$-$C_{10}$-Alkanolen und deren Gemischen.

Geeignete Ester und Diester monoethylenisch ungesättigter $C_3$-$C_8$-Mono- und $C_4$-$C_8$-Dicarbonsäuren mit $C_1$-$C_{30}$-Alkanolen, insbesondere mit $C_1$-$C_{10}$-Alkanolen, sind vor allem die Ester monoethylenisch ungesättigter $C_3$-$C_8$-Monocarbonsäuren, insbesondere die Ester der Acrylsäure und die Ester der Methacrylsäure mit $C_1$-$C_{30}$-Alkanolen, insbesondere mit $C_1$-$C_{10}$-Alkanolen, wie Methyl(meth)acrylat, Methylethacrylat, Ethyl(meth)acrylat, Ethylethacrylat, n-Propyl(meth)acrylat, Isopropyl(meth)acrylat, n-Butyl(meth)acrylat, sec.-Butyl(meth)acrylat, tert.-Butyl(meth)acrylat, tert.-Butylethacrylat, n-Hexyl(meth)acrylat, n-Heptyl(meth)acrylat, n-Octyl(meth)acrylat, 1,1,3,3-Tetramethylbutyl(meth)acrylat, Ethylhexyl(meth)acrylat, n-Nonyl(meth)acrylat, n-Decyl(meth)acrylat, n-Undecyl(meth)acrylat, Tridecyl(meth)acrylat, Myristyl(meth)acrylat, Pentadecyl(meth)acrylat, Palmityl(meth)acrylat, Heptadecyl(meth)acrylat, Nonadecyl(meth)acrylat, Arachinyl(meth)acrylat, Behenyl(meth)acrylat, Lignoceryl(meth)acrylat, Cerotinyl(meth)acrylat, Melissinyl(meth)acrylat, Palmitoleinyl(meth)acrylat, Oleyl(meth)acrylat, Linolyl(meth)acrylat, Linolenyl(meth)acrylat, Stearyl(meth)acrylat und Lauryl(meth)acrylat, aber auch die Diester monoethylenisch ungesättigter $C_4$-$C_8$-Dicarbonsäuren, insbesondere die Diester der Maleinsäure mit $C_1$-$C_{30}$-Alkanolen wie Dimethylmaleat, Diethylmaleat, Di-(n-propyl)-maleat, Diisopropylmaleat, Di-(n-butyl)-maleat, Di-(n-hexyl)-maleat, Di-(1,1,3,3-tetramethylbutyl)-maleat, Di-(n-nonyl)-maleat, Ditridecylmaleat, Dimyristylmaleat, Dipentadecylmaleat, Dipalmitylmaleat, Diarachinylmaleat und Mischungen davon. Der Begriff "(meth)acrylat" umfasst dabei sowohl den entsprechenden Ester der Acrylsäure wie auch den entsprechenden Ester der Methacrylsäure.

Geeignete Ester von Vinylalkohol und Allylalkohol mit $C_1$-$C_{30}$-Monocarbonsäuren sind z. B. Vinylformiat, Vinylacetat, Vinylpropionat, Vinylbutyrat, Vinyllaurat, Vinylstearat, Versaticsäurevinylester, Allylformiat, Allylacetat, Allylpropionat, Allylbutyrat, Allyllaurat, Vinylmethyacrylat, Allylmethacrylat, Vinylacrylat, Allylacrylat und Mischungen davon.

Geeignete Vinylaromaten sind Styrol, 2-Methylstyrol, 4-Methylstyrol, 2-(n-Butyl)styrol, 4-(n-Butyl)styrol, 4-(n-Decyl)styrol, insbesondere Styrol.

Weitere geeignete Monomere M3 sind beispielsweise Vinylhalogenide, Vinylidenhalogenide und Mischungen davon.

Geeignete Amide und Diamide monoethylenisch ungesättigter $C_3$-$C_8$-Mono- und $C_4$-$C_8$-Dicarbonsäuren mit $C_1$-$C_{30}$-Alkylaminen oder Di-$C_1$-$C_{30}$-alkylaminen, insbesondere mit $C_1$-$C_{10}$-Alkylaminen oder Di-$C_1$-$C_{10}$-alkylaminen, sind vor allem die Amide der Acrylsäure und der Methacrylsäure mit $C_1$-$C_{30}$-Alkylaminen oder Di-$C_1$-$C_{30}$-alkylaminen, insbesondere mit $C_1$-$C_{10}$-Alkylaminen oder Di-$C_1$-$C_{10}$-alkylaminen, wie z. B. N-Methyl(meth)acrylamid, N-Ethyl(meth)acrylamid, N-Propyl(meth)acrylamid, N-(n-Butyl)(meth)acrylamid, N-(tert.-Butyl)(meth)acrylamid, N-(n-Octyl)(meth)acrylamid, N-(1,1,3,3-Tetramethylbutyl)(meth)acrylamid, N-Ethylhexyl(meth)acrylamid, N-(n-Nonyl)(meth)acrylamid, N-(n-Decyl)(meth)acrylamid, N-(n-Undecyl)(meth)acrylamid, N-Tridecyl(meth)acrylamid, N-Myristyl(meth)acrylamid, N-Pentadecyl(meth)acrylamid, N-Palmityl(meth)acrylamid, N-Heptadecyl(meth)acrylamid, N-Nonadecyl(meth)acrylamid, N-Arachinyl(meth)acrylamid, N-Behenyl(meth)acrylamid, N-Lignoceryl(meth)acrylamid, N-Cerotinyl(meth)acrylamid, N-Melissinyl(meth)acrylamid, N-Palmitoleinyl(meth)acrylamid, N-Oleyl(meth)acrylamid, N-Linolyl(meth)acrylamid, N-Linolenyl(meth)acrylamid, N-Stearyl(meth)acrylamid, N-Lauryl(meth)acrylamid, N,N-Dimethyl(meth)acrylamid, N,N-Diethyl(meth)acrylamid, aber auch die Diamide und Imide der Maleinsäure mit $C_1$-$C_{30}$-Alkylaminen oder Di-$C_1$-$C_{30}$-alkylaminen, insbesondere mit $C_1$-$C_{10}$-Alkylaminen oder Di-$C_1$-$C_{10}$-alkylaminen, wie z. B.N,N'-Dimethylmaleinsäurediamid, N,N'-Diethylmaleinsäurediamid, N,N'-Dipropylmaleinsäurediamid, N,N'-Di-(tert.-butyl)-maleinsäurediamid, N,N'-Di-(n-octyl)-maleinsäurediamid, N,N'-Di-(n-nonyl)-maleinsäurediamid, N,N'-Ditridecylmaleinsäurediamid, N,N'-Dimyristylmaleinsäurediamid, N,N,N',N'-Tetramethylmaleinsäurediamid, N,N,N',N'-Tetraethylmaleinsäurediamid und Mischungen davon. Der Begriff "(meth)acrylamid" umfasst dabei sowohl das entsprechende Amid der Acrylsäure wie auch das entsprechende Amid der Methacrylsäure.

Geeignete Vinylhalogenide und Vinylidenhalogenide sind Vinylchlorid, Vinylidenchlorid, Vinylfluorid, Vinylidenfluorid und Mischungen davon.

Vorzugsweise ist wenigstens ein Monomer M3 ausgewählt unter Estern monoethylenisch ungesättigter $C_3$-$C_8$-Monocarbonsäuren, insbesondere Estern der Acrylsäure mit $C_1$-$C_6$-Alkanolen, Estern der Methacrylsäure mit $C_1$-$C_6$-Alkanolen und deren Gemischen.

Bevorzugt ist wenigstens ein Monomer M3 ausgewählt unter Methylacrylat, Ethylacrylat, n-Butylacrylat, tert.-Butylacrylat, 2-Ethylhexylacrylat, Methylmethacrylat, tert.-Butylmethacrylat.

Speziell ist wenigstens ein Monomer M3 Methylmethacrylat.

Erfindungsgemäß liegt der Anteil der Monomeren M3, bezogen auf das Gesamtgewicht der in Schritt ii) eingesetzten Monomere und des Saatpolymers im Bereich von 5,0 bis 99,9 Gew.-%, insbesondere im Bereich von 45,0 bis 99,8 Gew.-% und besonders bevorzugt im Bereich von 65,0 bis 99,0 Gew.-%.

Die Monomere M4 sind ausgewählt unter Monomeren M4a, die wenigstens eine anionische oder anionogene Gruppe tragen und neutralen Monomeren M4b, die eine Wasserlöslichkeit von > 50 g/L bei 20 °C aufweisen, und deren Gemischen.

Die Monomere M4a weisen in der Regel eine anionische oder anionogene Gruppe auf.

Eine erste Gruppe M4a1 der Monomere M4a sind ausgewählt unter ethylenisch ungesättigte Fettsäuren, insbesondere solche Fettsäuren mit 10 bis 24 Kohlenstoffatomen und 1 bis 4 Doppelbindungen im Molekül. Hierzu zählen Leinölfettsäuren und ungesättigte Fettsäuren.

Geeignete Leinölfettsäuren sind ausgewählt unter Ölsäure, Linolsäure und Linolensäure.

Geeignete ungesättigte Fettsäuren sind ausgewählt unter Rizinolsäure, Palmitoleinsäure, Elaidinsäure, Vaccensäure, Icosensäure, Cetoleinsäure, Erucasäure, Nervonsäure, Arachidonsäure, Timnodonsäure, Clupanodonsäure.

Eine zweite Gruppe M4a2 der Monomere M4a sind monoethylenisch ungesättigt, d. h. sie weisen genau eine ethylenisch ungesättigte C=C-Doppelbindung auf.

Die Monomere M4a2 sind ausgewählt unter monoethylenisch ungesättigten Monomeren mit wenigstens einer Carboxylatgruppe.

Monomere M4a2 sind vorzugsweise ausgewählt unter monoethylenisch ungesättigten $C_3$-$C_8$-Monocarbonsäuren, monoethylenisch ungesättigten $C_4$-$C_8$-Dicarbonsäuren und deren Salze, Anhydride oder Methylhalbester, monoethylenisch ungesättigten $C_5$-$C_8$-Tricarbonsäuren und deren Salze, Anhydride oder deren Monomethylester und Gemischen davon.

Geeignete monoethylenisch ungesättigte $C_3$-$C_8$-Monocarbonsäuren sind ausgewählt unter Acrylsäure, Methacrylsäure, Acryloxypropionsäure, Methacryloxypropionsäure, Acryloxyessigsäure, Methacryloxyessigsäure, Crotonsäure sowie deren Salze, Anhydride und Gemischen davon.

Besonders bevorzugt sind Acrylsäure, Methacrylsäure und Gemische davon.

Geeignete monoethylenisch ungesättigten $C_4$-$C_8$-Dicarbonsäuren sind ausgewählt unter Maleinsäure, Fumarsäure, Itaconsäure sowie deren Salze, Anhydride deren Monomethylester und Gemischen davon.

Geeignete monoethylenisch ungesättigten $C_5$-$C_8$-Tricarbonsäuren sind ausgewählt unter Aconitsäure und deren Salze, Anhydride oder deren Monomethylester und Gemischen davon.

Die Monomere M4b sind in der Regel neutral und haben in der Regel eine Wasserlöslichkeit in entionisiertem Wasser bei 20 °C und 1 bar von > 50 g/L, insbesondere von > 70 g/L (20 °C, 1 bar), bevorzugt > 80 g/L.

Die Monomere M4b sind monoethylenisch ungesättigt, d. h. sie weisen genau eine ethylenisch ungesättigte C=C-Doppelbindung auf.

Die Monomere M4b sind ausgewählt unter monoethylenisch ungesättigten Monomeren mit wenigstens einer Carbonsäureamidgruppe.

Die Monomere M4b sind beispielsweise primäre Amide monoethylenischer ungesättigter $C_3$-$C_8$-Monocarbonsäuren und deren Gemischen.

Geeignete primäre Amide monoethylenisch ungesättigter $C_3$-$C_8$-Monocarbonsäuren sind ausgewählt unter Acrylamid, Methacrylamid und Gemische davon.

Bevorzugt ist das Monomer M4 ausgewählt unter M4a, insbesondere M4a2.

Insbesondere ist das Monomer M4 ausgewählt unter Acrylsäure, Methacrylsäure und Gemischen davon.

Erfindungsgemäß liegt der Anteil der Monomeren M4, bezogen auf das Gesamtgewicht der in Schritt ii) eingesetzten Monomere und des Saatpolymers im Bereich von 0 bis 75,0 Gew.-%, insbesondere im Bereich von bevorzugt 0,1 bis 50,0 Gew.-% und besonders bevorzugt im Bereich von 0,5 bis 30,0 Gew.-%.

Erfindungsgemäß liegt der Anteil des Saatpolymers erhalten in Schritt i), bezogen auf das Gesamtgewicht der in Schritt ii) eingesetzten Monomere und des Saatpolymers im Bereich von 0,1 bis 20,0 Gew.-%, insbesondere im Bereich von 0,1 bis 15,0 Gew.-% und besonders bevorzugt im Bereich von 0,5 bis 5,0 Gew.-%.

Erfindungsgemäß liegt der Volumenmedian der Teilchengröße der Quellsaat, bestimmt durch hydrodynamische Fraktionierung, im ungequollenen Zustand im Bereich von 50 bis 300 nm. Bevorzugt liegt der Volumenmedian der Teilchengröße der Quellsaat, bestimmt durch hydrodynamische Fraktionierung, im ungequollenen Zustand im Bereich von 50 bis 200 nm.

<u>Schritt iii):</u>

In Schritt iii) wird wenigstens eine Polymerschale durch radikalische wässrige Emulsionspolymerisationsreaktion von der in Schritt ii) erhaltenen Quellsaat in Gegenwart von schalenbildenden Monomeren M5 gebildet. Im Anschluss daran wird erfindungsgemäß eine wässrige Dispersion von Emulsionspolymerteilchen erhalten.

Die schalenbildenden Monomeren M5 sind ausgewählt unter nicht-ionischen, monoethylenisch ungesättigten Monomeren M5-1, mit einer Wasserlöslichkeit von $\geq$ 50 g/L bei 20 °C, monoethylenisch ungesättigten Monomeren M5-2, ausgewählt unter Monomeren M5-2a, die wenigstens eine anionische oder anionogene Gruppe tragen und neutralen Monomeren M5-2b, die eine Wasserlöslichkeit von > 50 g/L bei 20 °C aufweisen und deren Gemischen.

Die Monomere M5-1 haben in der Regel eine Wasserlöslichkeit in entionisiertem Wasser bei 20 °C und 1 bar von $\geq$ 50 g/L, insbesondere von $\geq$ 30 g/L. Die Wasserlöslichkeit der Monomere M5-1 liegt typischerweise im Bereich von 0,1 bis 30 g/l (20 °C, 1 bar).

Die Monomere M5-1 sind nicht-ionisch, d. h. neutral. Sie werden im Wässrigen weder protoniert noch wirken sie als Säure.

Die Monomere M5-1 sind monoethylenisch ungesättigt, d. h. sie weisen genau eine ethylenisch ungesättigte C=C-Doppelbindung auf. Die Monomere M5-1 sind vorzugsweise ausgewählt unter Estern monoethylenisch ungesättigter $C_3$-$C_8$-Monocarbonsäuren mit $C_1$-$C_{10}$-Alkanolen, Estern monoethylenisch ungesättigter $C_4$-$C_8$-Dicarbonsäuren mit $C_1$-$C_{10}$-Alkanolen, Estern von Vinyl- oder Allylalkohol mit $C_1$-$C_{30}$-Monocarbonsäuren, Vinylaromaten, Amiden und Diamiden, monoethylenisch ungesättigter $C_3$-$C_8$-Monocarbonsäuren mit $C_1$-$C_{10}$-Alkylaminen, $C_4$-$C_8$-Dicarbonsäuren mit Di-$C_1$-$C_{10}$-alkylaminen und deren Gemischen, bevorzugt Estern monoethylenisch ungesättigter $C_3$-$C_8$-Monocarbonsäuren mit $C_1$-$C_{10}$-Alkanolen, Estern monoethylenisch ungesättigter $C_4$-$C_8$-Dicarbonsäuren mit $C_1$-$C_{10}$-Alkanolen und

deren Gemischen.

Geeignete Ester und Diester monoethylenisch ungesättigter $C_3$-$C_8$-Mono- und $C_4$-$C_8$-Dicarbonsäuren mit $C_1$-$C_{30}$-Alkanolen, insbesondere mit $C_1$-$C_{10}$-Alkanolen, sind vor allem die Ester monoethylenisch ungesättigter $C_3$-$C_8$-Monocarbonsäuren, insbesondere die Ester der Acrylsäure und die Ester der Methacrylsäure mit $C_1$-$C_{30}$-Alkanolen, insbesondere mit $C_1$-$C_{10}$-Alkanolen, wie Methyl(meth)acrylat, Methylethacrylat, Ethyl(meth)acrylat, Ethylethacrylat, n-Propyl(meth)acrylat, Isopropyl(meth)acrylat, n-Butyl(meth)acrylat, sec.-Butyl(meth)acrylat, tert.-Butyl(meth)acrylat, tert.-Butylethacrylat, n-Hexyl(meth)acrylat, n-Heptyl(meth)acrylat, n-Octyl(meth)acrylat, 1,1,3,3-Tetramethylbutyl(meth)acrylat, Ethylhexyl(meth)acrylat, n-Nonyl(meth)acrylat, n-Decyl(meth)acrylat, n-Undecyl(meth)acrylat, Tridecyl(meth)acrylat, Myristyl(meth)acrylat, Pentadecyl(meth)acrylat, Palmityl(meth)acrylat, Heptadecyl(meth)acrylat, Nonadecyl(meth)acrylat, Arachinyl(meth)acrylat, Behenyl(meth)acrylat, Lignoceryl(meth)acrylat, Cerotinyl(meth)acrylat, Melissinyl(meth)acrylat, Palmitoleinyl(meth)acrylat, Oleyl(meth)acrylat, Linolyl(meth)acrylat, Linolenyl(meth)acrylat, Stearyl(meth)acrylat und Lauryl(meth)acrylat, aber auch die Diester monoethylenisch ungesättigter $C_4$-$C_8$-Dicarbonsäuren, insbesondere die Diester der Maleinsäure mit $C_1$-$C_{30}$-Alkanolen wie Dimethylmaleat, Diethylmaleat, Di-(n-propyl)-maleat, Diisopropylmaleat, Di-(n-butyl)-maleat, Di-(n-hexyl)-maleat, Di-(1,1,3,3-tetramethylbutyl)-maleat, Di-(n-nonyl)-maleat, Ditridecylmaleat, Dimyristylmaleat, Dipentadecylmaleat, Dipalmitylmaleat, Diarachinylmaleat und Mischungen davon. Der Begriff "(meth)acrylat" umfasst dabei sowohl den entsprechenden Ester der Acrylsäure wie auch den entsprechenden Ester der Methacrylsäure.

Geeignete Ester von Vinylalkohol und Allylalkohol mit $C_1$-$C_{30}$-Monocarbonsäuren sind z. B. Vinylformiat, Vinylacetat, Vinylpropionat, Vinylbutyrat, Vinyllaurat, Vinylstearat, Versaticsäurevinylester, Allylformiat, Allylacetat, Allylpropionat, Allylbutyrat, Allyllaurat, Vinylmethyacrylat, Allylmethacrylat, Vinylacrylat, Allylacrylat und Mischungen davon.

Geeignete Vinylaromaten sind Styrol, 2-Methylstyrol, 4-Methylstyrol, 2-(n-Butyl)styrol, 4-(n-Butyl)styrol, 4-(n-Decyl)styrol, insbesondere Styrol.

Weitere geeignete Monomere M5-1 sind beispielsweise Vinylhalogenide, Vinylidenhalogenide, und Mischungen davon.

Geeignete Amide und Diamide monoethylenisch ungesättigter $C_3$-$C_8$-Mono- und $C_4$-$C_8$-Dicarbonsäuren mit $C_1$-$C_{30}$-Alkylaminen oder Di-$C_1$-$C_{30}$-alkylaminen, insbesondere mit $C_1$-$C_{10}$-Alkylaminen oder Di-$C_1$-$C_{10}$-alkylaminen, sind vor allem die Amide der Acrylsäure und der Methacrylsäure mit $C_1$-$C_{30}$-Alkylaminen oder Di-$C_1$-$C_{30}$-alkylaminen, insbesondere mit $C_1$-$C_{10}$-Alkylaminen oder Di-$C_1$-$C_{10}$-alkylaminen, wie z. B. N-Methyl(meth)acrylamid, N-Ethyl(meth)acrylamid, N-Propyl(meth)acrylamid, N-(n-Butyl)(meth)acrylamid, N-(tert.-Butyl)(meth)acrylamid, N-(n-Octyl)(meth)acrylamid, N-(1,1,3,3-Tetramethylbutyl)(meth)acrylamid, N-Ethylhexyl(meth)acrylamid, N-(n-Nonyl)(meth)acrylamid, N-(n-Decyl)(meth)acrylamid, N-(n-Undecyl)(meth)acrylamid, N-Tridecyl(meth)acrylamid, N-Myristyl(meth)acrylamid, N-Pentadecyl(meth)acrylamid, N-Palmityl(meth)acrylamid, N-Heptadecyl(meth)acrylamid, N-Nonadecyl(meth)acrylamid, N-Arachinyl(meth)acrylamid, N-Behenyl(meth)acrylamid, N-Lignoceryl(meth)acrylamid, N-Cerotinyl(meth)acrylamid, N-Melissinyl(meth)acrylamid, N-Palmitoleinyl(meth)acrylamid, N-Oleyl(meth)acrylamid, N-Linolyl(meth)acrylamid, N-Linolenyl(meth)acrylamid, N-Stearyl(meth)acrylamid, N-Lauryl(meth)acrylamid, N,N-Dimethyl(meth)acrylamid, N,N-Diethyl(meth)acrylamid, aber auch die Diamide und Imide der Maleinsäure mit $C_1$-$C_{30}$-Alkylaminen oder Di-$C_1$-$C_{30}$-alkylaminen, insbesondere mit $C_1$-$C_{10}$-Alkylaminen oder Di-$C_1$-$C_{10}$-alkylaminen, wie z. B.N,N'-Dimethylmaleinsäurediamid, N,N'-Diethylmaleinsäurediamid, N,N'-Dipropylmaleinsäurediamid, N,N'-Di-(tert.-butyl)-maleinsäurediamid, N,N'-Di-(n-octyl)-maleinsäurediamid, N,N'-Di-(n-nonyl)-maleinsäurediamid, N,N'-Ditridecylmaleinsäurediamid, N,N'-Dimyristylmaleinsäurediamid, N,N,N',N'-Tetramethylmaleinsäurediamid, N,N,N',N'-Tetraethylmaleinsäurediamid und Mischungen davon. Der Begriff "(meth)acrylamid" umfasst dabei sowohl das entsprechende Amid der Acrylsäure wie auch das entsprechende Amid der Methacrylsäure.

Geeignete Vinylhalogenide und Vinylidenhalogenide sind Vinylchlorid, Vinylidenchlorid, Vinylfluorid, Vinylidenfluorid und Mischungen davon.

Vorzugsweise ist wenigstens ein Monomer M5-1 ausgewählt unter Vinylaromaten, insbesondere Styrol, Estern monoethylenisch ungesättigter $C_3$-$C_8$-Monocarbonsäuren, insbesondere Estern der Acrylsäure mit $C_1$-$C_6$-Alkanolen, Estern der Methacrylsäure mit $C_1$-$C_6$-Alkanolen und deren Gemischen.

Bevorzugt ist wenigstens ein Monomer M5-1 ausgewählt unter Styrol, Methylacrylat, Ethylacrylat, n-Butylacrylat, n-Butylmethacrylat, tert.-Butylacrylat, 2-Ethylhexylacrylat, Methylmethacrylat, tert.-Butylmethacrylat und Gemischen davon.

Speziell ist wenigstens ein Monomer M5-1 ausgewählt unter Styrol, Methylmethacrylat, n-Butylmethacrylat und Gemischen davon.

Erfindungsgemäß liegt der Anteil der Monomeren M5-1, bezogen auf das Gesamtgewicht der eingesetzten Monomeren M5 im Bereich von 25,0 bis 100,0 Gew.-%, insbesondere im Bereich von 60,0 bis 99,9 Gew.-% und besonders bevorzugt im Bereich von 90,0 bis 99,0 Gew.-%.

Die Monomere M5-2 sind ausgewählt unter Monomeren M5-2a, die wenigstens eine anionische oder anionogene Gruppe tragen und neutralen Monomeren M5-2b, die eine Wasserlöslichkeit von > 50 g/L bei 20 °C aufweisen, und deren Gemischen.

Die Monomeren M5-2a weisen in der Regel eine anionische oder anionogene Gruppe auf.

Eine erste Gruppe M5-2a1 der Monomere M5-2a sind ethylenisch ungesättigte Fettsäuren, insbesondere solche Fettsäuren mit 10 bis 24 Kohlenstoffatomen und 1 bis 4 Doppelbindungen im Molekül. Hierzu zählen Leinölfettsäuren und ungesättigte Fettsäuren.

Geeignete Fettsäuren sind ausgewählt unter Rizinolsäure, Palmitoleinsäure, Elaidinsäure, Vaccensäure, Icosensäure, Cetoleinsäure, Erucasäure, Nervonsäure, Arachidonsäure, Timnodonsäure, Clupanodonsäure.

Eine zweite Gruppe M5-2a2 der Monomere M5-2a sind monoethylenisch ungesättigt, d. h. sie weisen genau eine ethylenisch ungesättigte C=C-Doppelbindung auf.

Die Monomere M5-2a2 sind ausgewählt unter monoethylenisch ungesättigten Monomeren mit wenigstens einer Carboxylat- oder Carbonsäureamidgruppe.

Monomere M5-2a2 sind vorzugsweise ausgewählt unter monoethylenisch ungesättigten $C_3$-$C_8$-Monocarbonsäuren, monoethylenisch ungesättigten $C_4$-$C_8$-Dicarbonsäuren und deren Salze, Anhydride oder Methylhalbester, monoethylenisch ungesättigten $C_5$-$C_8$-Tricarbonsäuren und deren Salze, Anhydride oder deren Monomethylester und Gemischen davon.

Geeignete monoethylenisch ungesättigte $C_3$-$C_8$-Monocarbonsäuren sind ausgewählt unter Acrylsäure, Methacrylsäure, Acryloxypropionsäure, Methacryloxypropionsäure, Acryloxyessigsäure, Methacryloxyessigsäure, Crotonsäure sowie deren Salze, Anhydride und Gemischen davon.

Geeignete monoethylenisch ungesättigte $C_4$-$C_8$-Dicarbonsäuren sind ausgewählt unter Maleinsäure, Fumarsäure, Itaconsäure sowie deren Salze, Anhydride, deren Monomethylester und Gemischen davon.

Geeignete monoethylenisch ungesättigte $C_5$-$C_8$-Tricarbonsäuren sind ausgewählt unter Aconitsäure und deren Salze, Anhydride oder deren Monomethylester und Gemischen davon.

Die Momonere M5-2b sind in der Regel neutral und haben in der Regel eine Wasserlöslichkeit in entionisiertem Wasser bei 20 °C und 1 bar von > 50 g/L, insbesondere von > 70 g/L (20 °C, 1 bar), bevorzugt > 80 g/L.

Die Monomere M5-2b sind monoethylenisch ungesättigt, d. h. sie weisen genau eine ethylenisch ungesättigte C=C-Doppelbindung auf.

Die Monomere M5-2b sind ausgewählt unter monoethylenisch ungesättigten Monomeren mit wenigstens einer Carbonsäureamidgruppe.

Die Monomere M5-2b sind beispielsweise primäre Amide monoethylenisch ungesättigter $C_3$-$C_8$-Monocarbonsäuren und deren Gemische.

Geeignete primäre Amide monoethylenisch ungesättigter $C_3$-$C_8$-Monocarbonsäuren sind ausgewählt unter Acrylamid, Methacrylamid und Gemischen davon.

Bevorzugt ist das Monomer M5-2 ausgewählt unter M5-2a, insbesondere M5-2a1.

Insbesondere ist das Monomer M5-2 ausgewählt unter Acrylsäure, Methacrylsäure und deren Gemischen, speziell Methacrylsäure.

Erfindungsgemäß liegt der Anteil der Monomeren M5-2, bezogen auf das Gesamtgewicht der eingesetzten Monomeren M5 im Bereich von 0,0 bis 75,0 Gew.-%, insbesondere im Bereich von 0,1 bis 40,0 Gew.-% und besonders bevorzugt im Bereich von 1 bis 10,0 Gew.-%.

<u>Schritt iv):</u>

Die in Schritt iii) erhaltene Dispersion von Emulsionspolymerteilchen wird in Schritt iv) auf einen pH-Wert von mindestens 7,5 mit mindestens einer Base eingestellt.

Geeignete Basen sind ausgewählt unter Alkali- oder Erdalkaliverbindungen, Ammoniak, primären Aminen, sekundären Aminen und tertiären Aminen.

Geeignete Alkali- oder Erdalkaliverbindungen sind Natriumhydroxid, Kaliumhydroxid, Calciumhydroxid, Magnesiumoxid, Natriumcarbonat und Gemische davon.

Geeignete Amine sind Ethylamin, Propylamin, Monoisopropylamin, Monobutylamin, Hexylamin, Ethanolamin, Dimethylamin, Diethylamin, Di-n-propylamin, Tributylamin, Triethanolamin, Dimethoxyethylamin, 2- Ethoxyethylamin, 3-Ethoxypropylamin, Dimethylethanolamin, Diisopropanolamin, Morpholin, Ethylendiamin, 2-Diethylaminethylamin, 2,3-Diaminopropan, 1,2-Propylendiamin, Dimethylaminopropylamin, Neopentandiamin, Hexamethylendiamin, 4,9-Dioxadodecan-1,12-diamin, Polyethylenimin, Polyvinylamin oder deren Mischungen.

Die Neutralisation wird bevorzugt mit Ammoniak oder Natriumhydroxid durchgeführt.

Die Neutralisation kann in Gegenwart von mindestens einem Weichmachermonomer stattfinden. Die Neutralisation kann auch nach der Zugabe eines Weichmachermonomers stattfinden.

Vorzugsweise erfolgt die Neutralisation in Schritt iv) nach der Zugabe eines Weichmachermonomers.

Weichmachermonomere sind solche, die eine Ceiling Temperatur von kleiner 181 °C, bevorzugt kleiner von 95 °C aufweisen. Wird Schritt iv) in Anwesenheit eines Weichmachermonomers durchgeführt, so versteht man unter dem Weichmachermonomer beispielsweise Estern monoethylenisch ungesättigter $C_3$-$C_8$-Monocarbonsäuren mit

$C_1$-$C_{10}$-Alkanolen, Estern monoethylenisch ungesättigter $C_4$-$C_8$-Dicarbonsäuren mit $C_1$-$C_{10}$-Alkanolen, Vinylaromaten, 2-Methyl-2-buten, 2,3-Dimethyl-2-buten, 1,1-Diphenylethen, Estern der 2-Phenylacrylsäure, Estern der Atropasäure und deren Gemischen, bevorzugt Vinylaromaten.

Geeignete Ester und Diester monoethylenisch ungesättigter $C_3$-$C_8$-Mono- und $C_4$-$C_8$-Dicarbonsäuren mit $C_1$-$C_{30}$-Alkanolen, insbesondere mit $C_1$-$C_{10}$-Alkanolen, sind vor allem die Ester monoethylenisch ungesättigter $C_3$-$C_8$-Monocarbonsäuren, insbesondere die Ester der Acrylsäure und die Ester der Methacrylsäure mit $C_1$-$C_{30}$-Alkanolen, insbesondere mit $C_1$-$C_{10}$-Alkanolen, wie Methyl-2-tert-butylacrylat, Methacrylat, Methylmethacrylat, Ethylacrylat, Ethylmethacrylat, Butylacrylat, Butylmethacrylat, 2-Ethylhexylacrylat, 2- Ethylhexylmethacrylat, Benzylacrylat, Benzylmethacrylat, Laurylacrylat, Laurylmethacrylat, Oleylacrylat, Oleylmethacrylat, Palmitylacrylat, Palmitylmethacrylat, Stearylacrylat, Stearylmethacrylat und Mischungen davon. Der Begriff "(meth)acrylat" umfasst dabei sowohl den entsprechenden Ester der Acrylsäure wie auch den entsprechenden Ester der Methacrylsäure.

Geeignete Vinylaromaten sind Styrol, 2-Methylstyrol, 4-Methylstyrol, 2-(n-Butyl)styrol, 4-(n-Butyl)styrol, 4-(n-Decyl)styrol, $\alpha$-Methylstyrol und deren Mischungen, insbesondere Styrol, $\alpha$-Methylstyrol und deren Mischungen.

Unter Estern der 2-Phenylacrylsäure sind die Methylester, Ethylester, n-Propylester und n-Butylester besonders geeignet.

Unter Estern der Atropasäure sind die Methylester, Ethylester, n-Propylester und n-Butylester besonders geeignet.

Weitere Weichmachermonomere sind in J. Brandrup, E.H. Immergut, Polymer Handbook 3rd Edition, 11/316ff aufgeführt.

Besonders bevorzugt werden als Weichmachermonomere in Schritt iv) Styrol oder $\alpha$-Methylstyrol eingesetzt.

Zur Sicherstellung, dass kein wesentlicher Radikalfluss, unter dem die Weichmachermonomere polymerisieren können, vorliegt, gibt es verschiedene Mittel, wie die Zugabe eines oder mehrerer Polymerisationsinhibitoren, die Zugabe eines oder mehrerer Reduktionsmittel, das Warten für einen ausreichenden Zeitraum, bis keine nennenswerte Anzahl an freien Radikalen mehr vorhanden ist, aufgrund dessen Abbruch erfolgt, das Abkühlen des Inhalts des Reaktors, um die Reaktivität der freien Radikale sowie die Bildung neuer Radikale durch thermischen Zerfall einzuschränken sowie Kombinationen hiervon.

Ein bevorzugtes Mittel schließt die Zugabe eines oder mehrerer Polymerisationsinhibitoren ein. Geeignete Polymerisationsinhibitoren sind ausgewählt unter N,N-Diethylhydroxylamin, N-Nitrosodiphenylamin, 2,4-Dinitrophenylhydrazin, p-Phenylendiamin, Phenathiazin, Alloocimen, Triethylphosphit, 4-Nitrosophenol, 2-Nitrophenol, p-Aminophenol, 4-Hydroxy-TEMPO (auch bekannt als 4-Hydroxy-2,2,6,6-tetramethylpiperidinyloxy, freies Radikal), Hydrochinon, p-Methoxyhydrochinon, tert-Butyl-p-hydrochinon, 2,5-Di-tert-butyl-p-hydrochinon, 1,4-Naphthalindiol, 4-tert-Buty-1-catechol, Kupfersulfat, Kupfernitrat, Kresol und Phenol.

Typische Reduktionsmittel sind reduzierend wirkende Schwefelverbindungen, beispielsweise Bisulfite, Sulfite, Sulfinate, Thiosulfate, Dithionite und Tetrathionate von Alkalimetallen und Ammoniumverbindungen und deren Adukte wie Natriumhydroxymethylsulfinate und Acetonbisulfite sowie reduzierend wirkende Polyhydroxy-Verbindungen wie Kohlenhydrate und deren Derivate wie beispielsweise Ascorbinsäure, Isoascorbinsäure und deren Salze (z. B. Natrium-Erythorbat). Wenn verwendet, werden die Polymerisationsinhibitoren oder Reduktionsmittel in einer wirksamen Menge zugegeben, die im Wesentlichen jede Polymerisation stoppt, im Allgemeinen 25 bis 5000 Teile pro Million ("ppm"), vorzugsweise 50 bis 3500 ppm, basierend auf den Polymerfeststoffen. Bevorzugt werden die Polymerisationsinhibitor(en) oder Reduktionsmittel zugegeben, während sich das Mehrstufen-Polymer bei oder unter der Temperatur befindet, bei der das Hüllstufenpolymer polymerisiert wurde.

Wird Schritt iv) in Gegenwart eines Weichmachermonomers durchgeführt, so liegt der Anteil des Weichmachermonomers im Bereich von 0,5 bis 20 Gew.-%, bezogen auf das Gesamtgewicht des Emulsionspolymers, bevorzugt 2,0 bis 10,0 Gew.-%, bezogen auf das Gesamtgewicht des Emulsionspolymers.

Schritt v) und Schritt vi):

Im Anschluss an Schritt iv) kann in einem weiteren Schritt v) durch radikalische Polymerisation der in Schritt iv) erhaltenen Dispersion der Polymerteilchen durch Zugabe von weiteren schalenbildenen Monomeren M5 weitere Schalen gebildet werden.

Die Monomere M5 sind oben definiert.

Vorzugsweise ist wenigstens ein Monomer M5-1 in Schritt v) ausgewählt unter Vinylaromaten, Estern von Vinylalkohol und Allylalkohol mit $C_1$-$C_{30}$-Monocarbonsäuren und deren Gemischen.

Speziell ist wenigstens ein Monomer M5-1 in Schritt v) ausgewählt unter Styrol, Allylmethacrylat und deren Gemischen.

Bevorzugt ist das Monomer M5-2 im Schritt v) ausgewählt unter M5-2a2. Insbesondere ist das Monomer M5-2 im Schritt v) ausgewählt unter Acrylsäure und Methacrylsäure, speziell Methacrylsäure.

Optional kann in einem weiteren Schritt vi) wenigstens eine weitere Schale der in Schritt v) erhaltenen Emulsionpolymerteilchen in einer radikalischen wässrigen Emulsionpolymerisation in Gegenwart wenigstens eines der Monomere M5, wie oben definiert, gebildet werden.

Die Schritte i), ii), iii), iv), v) und vi) können zusätzlich zu den Monomeren M1, M2, M3, M4, M5 und Weichmachermonomeren ein oder mehrere Monomere M6 umfassen. M6 ist ausgewählt unter Hydroxy-$C_2$-$C_4$-alkylestern monoethylenisch ungesättigter $C_3$-$C_8$-Monocarbonsäuren und deren Gemischen.

Als M6 geeignete Hydroxy-$C_2$-$C_4$-alkylester monoethylenisch ungesättigter $C_3$-$C_8$-Monocarbonsäuren sind beispielsweise die Hydroxy-$C_2$-$C_4$-alkylester der Acrylsäure und der Methacrylsäure wie 2-Hydroxyethylacrylat, 2-Hydroxyethylmethacrylat, 2-Hydroxyethylethacrylat, 2-Hydroxypropylacrylat, 2-Hydroxypropylmethacrylat, 3-Hydroxypropylacrylat, 3-Hydroxypropylmethacrylat, 3-Hydroxybutylacrylat, 3-Hydroxybutylmethacrylat, 4-Hydroxybutylacrylat, 4-Hydroxybutylmethacrylat, und Mischungen davon zu nennen.

Die Glasübergangstemperatur des Kernstufenpolymers, bestimmt nach der Fox-Gleichung (John Wiley & Sons Ltd., Baffins Lane, Chichester, England, 1997) liegt im protonierten Zustand im Bereich von -20 °C bis 150 °C.

Wird in wässriger Lösung oder Verdünnung polymerisiert, so können die Monomere M1 bis M6 und Weichmachmonomere vor oder während der Polymerisation ganz oder teilweise durch Basen neutralisiert werden. Als Basen können beispielsweise Alkali- oder Erdalkaliverbindungen wie Natriumhydroxid, Kaliumhydroxid, Calciumhydroxid, Magnesiumoxid, Natriumcarbonat; Ammoniak; primäre, sekundäre und tertiäre Amine, wie Ethylamin, Propylamin, Monoisopropylamin, Monobutylamin, Hexylamin, Ethanolamin, Dimethylamin, Diethylamin, Di-n-propylamin, Tributylamin, Triethanolamin, Dimethoxyethylamin, 2- Ethoxyethylamin, 3-Ethoxypropylamin, Dimethylethanolamin, Diisopropanolamin, Morpholin, Ethylendiamin, 2-Diethylaminethylamin, 2,3-Diaminopropan, 1,2-Propylendiamin, Dimethylaminopropylamin, Neopentandiamin, Hexamethylendiamin, 4,9-Dioxadodecan-1,12-diamin, Polyethylenimin , Polyvinylamin oder Mischungen der aufgeführten eingesetzt werden.

Die Polymerisate können nach üblichen Polymerisationsverfahren der Emulsionspolymerisation hergestellt werden. Es wird bevorzugt unter Ausschluss von Sauerstoff gearbeitet, vorzugsweise in einem Stickstoffstrom. Für die Polymerisationsmethode werden die üblichen Apparaturen verwendet, z. B. Rührkessel, Rührkesselkaskaden, Autoklaven, Rohrreaktoren und Kneter. Die Polymerisation kann in Lösungs- oder Verdünnungsmitteln, wie z. B. Toluol, *o*-Xylol, *p*-Xylol, Cumol, Chlorbenzol, Ethylbenzol, technischen Mischungen von Alkylaromaten, Cyclohexan, technischen Aliphatenmischungen, Aceton, Cyclohexanon, Tetrahydrofuran, Dioxan, Glykolen und Glykolderivaten, Polyalkylenglykolen und deren Derivate, Diethylether, *tert*.-Butylmethyl-ether, Essigsäuremethylester, Isopropanol, Ethanol, Wasser oder Mischungen, wie z. B. Isopropanol/Wasser-Mischungen, ausgeführt werden.

Die Polymerisation kann bei Temperaturen von 20 °C bis 300 °C, vorzugsweise von 50 °C bis 200 °C durchgeführt werden.

Die Polymerisation wird vorzugsweise in Gegenwart von Radikale bildenden Verbindungen durchgeführt. Man benötigt von diesen Verbindungen bis zu 30, vorzugsweise 0,05 bis 15, besonders bevorzugt 0,2 bis 8 Gew.-%, bezogen auf die bei der Polymerisation eingesetzten Monomeren. Bei mehrkomponentigen Initiatorsystemen (z. B. RedOx-Initiatorsystemen) beziehen sich die vorstehenden Gewichtsangaben auf die Summe der Komponenten.

Geeignete Polymerisationsinitiatoren sind beispielsweise Peroxide, Hydroperoxide, Peroxodisulfate, Percarbonate, Peroxiester, Wasserstoffperoxid und Azoverbindungen. Beispiele für Initiatoren, die wasserlöslich oder auch wasserunlöslich sein können, sind Wasserstoffperoxid, Dibenzoylperoxid, Dicyclohexylperoxidicarbonat, Dilauroylperoxid, Methylethylketonperoxid, Di-*tert*.-Butylperoxid, Acetylacetonperoxid, *tert*.-Butylhydroperoxid, Cumolhydroperoxid, *tert*.-Butylperneodecanoat, *tert*.-Amylperpivalat, *tert*.-Butylperpivalat, *tert*.-Butylperneohexanoat, *tert*.-Butylper-2-ethylhexanoat, *tert*.-Butyl-perbenzoat, Lithium-, Natrium-, Kalium- und Ammoniumperoxodisulfat, Azodiisobutyronitril, 2,2'-Azobis(2-amidinopropan)dihydrochlorid, 2-(Carbamoylazo)isobutyronitril und 4,4-Azobis(4-cyanovaleriansäure).

Die Initiatoren können allein oder in Mischung untereinander angewendet werden, z. B. Mischungen aus Wasserstoffperoxid und Natriumperoxodisulfat. Für die Polymerisation in wässrigem Medium werden bevorzugt wasserlösliche Initiatoren eingesetzt.

Auch die bekannten RedOx-Initiatorsysteme können als Polymerisationsinitiatoren verwendet werden. Solche RedOx-Initiatorsysteme enthalten mindestens eine peroxidhaltige Verbindung in Kombination mit einem RedOx-Coinitiator z. B. reduzierend wirkenden Schwefelverbindungen, beispielsweise Bisulfite, Sulfite, Sulfinate, Thiosulfate, Dithionite und Tetrathionate von Alkalimetallen und Ammoniumverbindungen und deren Adukte wie Natriumhydroxymethylsulfinate und Acetonbisulfite sowie Ascorbinsäure, Isoascorbinsäure und Natrium Erythorbat. So kann man Kombinationen von Peroxodisulfaten mit Alkalimetall- oder Ammoniumhydrogensulfiten einsetzen, z. B. Ammoniumperoxodisulfat und Ammoniumdisulfit. Die Menge der peroxidhaltigen Verbindung zum RedOx-Coinitiator beträgt 30 : 1 bis 0,05 : 1.

In Kombination mit den Initiatoren bzw. den RedOx-Initiatorsystemen können zusätzlich Übergangsmetallkatalysatoren eingesetzt werden, z. B. Salze von Eisen, Kobalt, Nickel, Kupfer, Vanadium und Mangan. Geeignete Salze sind z. B. Eisen-II-sulfat, Kobalt-II-chlorid, Nickel-II-sulfat, Kupfer-I-chlorid. Bezogen auf die zu polymerisierenden Monomere oder auf die zu polymerisierenden Monomere einer Stufe wird das reduzierend wirkende Übergangsmetallsalz in einer Konzentration von 0,1 ppm bis 1 000 ppm eingesetzt. So kann man Kombinationen von Wasserstoffperoxid mit Eisen-II-Salzen einsetzen, wie beispielsweise 0,5 bis 30 % Wasserstoffperoxid und 0,1 bis 500 ppm Mohrsches Salz.

Auch bei der Polymerisation in organischen Lösungsmitteln können in Kombination mit den obengenannten Initiatoren RedOx-Coinitiatoren und/oder Übergangsmetallkatalysatoren mitverwendet werden, z. B. Benzoin, Dimethylanilin, Ascorbinsäure sowie organisch lösliche Komplexe von Schwermetallen, wie Kupfer, Cobalt, Eisen, Mangan, Nickel und Chrom. Die üblicherweise verwendeten Mengen an RedOx-Coinitiatoren bzw. Übergangsmetallkatalysatoren betragen hier üblicherweise etwa 0,1 bis 1 000 ppm, bezogen auf die eingesetzten Mengen an Monomeren.

Falls die Reaktionsmischung an der unteren Grenze des für die Polymerisation in Betracht kommenden Temperaturbereiches anpolymerisiert und anschließend bei einer höheren Temperatur auspolymerisiert wird, ist es zweckmäßig, mindestens zwei verschiedene Initiatoren oder Initiatorsysteme zu verwenden, die bei unterschiedlichen Temperaturen zerfallen, so dass in jedem Temperaturintervall eine ausreichende Konzentration an Radikalen zur Verfügung steht oder ein RedOx-Inititaorsystem zu verwenden, bei dem die peroxidhaltige Komponente bei niedriger Temperatur zunächst durch ein Coinitiator aktiviert wird und bei einer höheren Temperatur thermisch zerfällt, ohne dass weiterer Coinitiator notwendig ist.

Der Initiator kann auch in Stufen zugegeben werden, bzw. die Geschwindigkeit der Initiator-Zugabe kann über die Zeit variiert werden.

Um Polymerisate mit niedrigem mittlerem Molekulargewicht herzustellen, ist es oft zweckmäßig, die Copolymerisation in Gegenwart von Reglern durchzuführen. Hierfür können übliche Regler verwendet werden, wie beispielsweise organische SH-Gruppen enthaltende Verbindungen, wie 2-Mercaptoethanol, 2-Mercaptopropanol, Mercaptoessigsäure, *tert*.-Butylmercaptan, *n*-Octylmercaptan, *n*-Dodecylmercaptan und *tert*.-Dodecylmercaptan, $C_1$- bis $C_4$-Aldehyde, wie Formaldehyd, Acetaldehyd, Propionaldehyd, Hydroxylammoniumsalze wie Hydroxylammoniumsulfat, Ameisensäure, Natriumbisulfit, hypophosphorige Säure bzw. deren Salze oder Isopropanol. Die Polymerisationsregler werden im Allgemeinen in Mengen von 0,1 bis 20 Gew.-%, bezogen auf die Monomeren eingesetzt. Auch durch die Wahl des geeigneten Lösungsmittels kann auf das mittlere Molekulargewicht Einfluss genommen werden. So führt die Polymerisation in Gegenwart von Verdünnungsmitteln mit benzylischen H-Atomen oder in Gegenwart von sekundären Alkoholen, wie z. B. Isopropanol, zu einer Verringerung des mittleren Molekulargewichtes durch Kettenübertragung.

Polymerisate mit geringem bzw. geringerem Molekulargewicht erhält man auch durch: Variation der Temperatur und/oder der Initiator-Konzentration und/oder der Zulaufgeschwindigkeit der Monomeren.

Um höhermolekulare Copolymerisate herzustellen, ist es oft zweckmäßig, bei der Polymerisation in Gegenwart von Vernetzern zu arbeiten. Solche Vernetzer sind Verbindungen mit zwei oder mehreren ethylenisch ungesättigten Gruppen, wie beispielsweise Diacrylate oder Dimethacrylate von mindestens zweiwertigen gesättigten Alkoholen, wie z.B. Ethylenglykoldiacrylat, Ethylenglykoldimethacrylat, 1,2-Propylenglykoldiacrylat, 1,2-Propylenglykoldimethacrylat, Butandiol-1,4-diacrylat, Butandiol-1,4-dimethacrylat, Hexandioldiacrylat, Hexandioldimethacrylat, Neopentylglykoldiacrylat, Neopentylglykoldimethacrylat, 3-Methylpentandioldiacrylat und 3-Methylpentandioldimethacrylat. Auch die Acrylsäure- und Methacrylsäureester von Alkoholen mit mehr als 2 OH-Gruppen können als Vernetzer eingesetzt werden, z. B. Trimethylolpropantriacrylat oder Trimethylolpropantrimethacrylat. Eine weitere Klasse von Vernetzern sind Diacrylate oder Dimethacrylate von Polyethylenglykolen oder Polypropylenglykolen mit Molekulargewichten von jeweils 200 g/mol bis 9 000 g/mol. Polyethylenglykole bzw. Polypropylenglykole, die für die Herstellung der Diacrylate oder Dimethacrylate verwendet werden, haben vorzugsweise ein Molekulargewicht von jeweils 400 g/mol bis 2 000 g/mol. Außer den Homopolymerisaten des Ethylenoxids bzw. Propylenoxids können auch Blockcopolymerisate aus Ethylenoxid und Propylenoxid oder Copolymerisate aus Ethylenoxid und Propylenoxid eingesetzt werden, die die Ethylenoxid- und Propylenoxid-Einheiten statistisch verteilt enthalten. Auch die Oligomeren des Ethylenoxids bzw. Propylenoxids sind für die Herstellung der Vernetzer geeignet, z. B. Diethylenglykoldiacrylat, Diethylenglykoldimethacrylat, Triethylenglykoldiacrylat, Triethylenglykoldimethacrylat, Tetraethylenglykoldiacrylat und/oder Tetraethylenglykoldimethacrylat.

Als Vernetzer eignen sich weiterhin Vinylacrylat, Vinylmethacrylat, Vinylitakonat, Adipinsäuredivinylester, Butandioldivinylether, Trimethylolpropantrivinylether, Allylacrylat, Allylmethacrylat, Methylallymethacrylat, Diallylphthalat, Triallylisocyanurat, Pentaerithrittriallylether, Triallylsaccharose, Pentaallylsaccharose, Pentaallylsucrose, Methylenbis(meth)acrylamid, Divinylethylenharnstoff, Divinylpropylenharnstoff, Divinylbenzol, Divinyldioxan, Triallylcyanurat, Tetraallylsilan, Tetravinylsilan und Bis- oder Polyacrylsiloxane (z. B. Tegomere® der Evonik Industries AG).

Die Vernetzer werden vorzugsweise in Mengen von 0,1 bis 70 Gew.-%, bezogen auf die zu polymerisierenden Monomere bzw. auf die zu polymerisierenden Monomere einer Stufe eingesetzt. Die Vernetzer können in jeder Stufe zugegeben werden.

Weiterhin kann es vorteilhaft sein, die Monomertröpfchen bzw. Polymerteilchen durch grenzflächenaktive Hilfsstoffe zu stabilisieren. Typischerweise verwendet man hierzu Emulgatoren oder Schutzkolloide. Es kommen anionische, nichtionische, kationische und amphotere Emulgatoren in Betracht. Anionische Emulgatoren sind beispielsweise Alkylbenzylsulfonsäuren Erdalkaliealkylbenzolsulfonate, sulfonierte Fettsäuren, sulfonierte Olefine, sulfonierte Diphenylether, Sulfosuccinate, Fettalkoholsulfate, Alkylphenolsulfate, Alkylpolyglycolethersulfate, Fettalkoholethersulfate Fettalkoholphosphate, Alkylphenolphosphate, Alkylpolyglycoletherphosphate, Alkylpolyalkylenoxidphosphate, und Fettalkoholetherphosphate. Als nichtionische Emulgatoren können beispielsweise Alkylphenolethoxylate, Primäralkoholethoxilate, Fettsäureethoxilate, Alkanolamidethoxilate, und Fettaminethoxilate verwendet werden. Als kationische bzw. amphotere Emulgatoren werden beispielsweise verwendet: Quaternisierte Aminalkoxylate, Alkylbetaine, Alkylamidobetaine und Sulfobetaine.

Typische Schutzkolloide sind beispielsweise Cellulosederivate, Polyvinylacetat, Polyvinylalkohol, Polyvinylether, Stärke und Stärkederivate, Dextran, Polyvinylpyrrolidon, Polyvinylpyridin, Polyethylenimin, Polyvinylimidazol, Polyvinylsuccinimid, Polyvinyl-2-methylsuccinimid, Polyvinyl-1,3-oxazolidon-2, Polyvinyl-2-methylimidazolin und Maleinsäure bzw. Maleinsäureanhydrid enthaltende Copolymerisate, wie sie z. B. in DE 2 501 123 beschrieben sind.

Vorzugsweise werden Erdalkaliealkylbenzolsulfonate und Alkylpolyglycolethersulfate eingesetzt.

Die Emulgatoren oder Schutzkolloide werden üblicherweise in Konzentrationen von 0,05 bis 20 Gew.-%, bezogen auf die zu polymerisierenden Monomere bzw. auf die zu polymerisierenden Monomere einer Stufe eingesetzt.

Die Durchführung der Polymerisation kann nach einer Vielzahl von Varianten kontinuierlich oder diskontinuierlich durchgeführt werden. Üblicherweise legt man einen Teil der Monomere gegebenenfalls in einem geeigneten Verdünnungsmittel oder Lösungsmittel und gegebenenfalls in Anwesenheit eines Emulgators, eines Schutzkolloids oder weiterer Hilfsstoffe vor, inertisiert und erhöht die Temperatur bis zum Erreichen der gewünschten Polymerisationstemperatur. Es kann allerdings auch lediglich ein geeignetes Verdünnungsmittel vorgelegt sein. Innerhalb eines definierten Zeitraumes werden der Radikalinitiator, weitere Monomere und sonstige Hilfsstoffe, wie z. B. Regler oder Vernetzer, jeweils gegebenenfalls in einem Verdünnungsmittel zudosiert. Die Zulaufzeiten können unterschiedlich lang gewählt werden. Beispielsweise kann man für den Initiatorzulauf eine längere Zulaufzeit wählen als für den Monomerzulauf.

Wird das Polymerisat in einem wasserdampfflüchtigen Lösungsmittel oder Lösungsmittelgemisch hergestellt, so kann das Lösungsmittel durch Einleiten von Wasserdampf abgetrennt werden, um so zu einer wässrigen Lösung oder Dispersion zu gelangen. Das Polymerisat kann von dem organischen Verdünnungsmittel auch durch einen Trocknungsprozess abgetrennt werden.

Durch das erfindungsgemäße Verfahren erhält man eine deutlich höhere Streueffizienz in Anstrichmitteln und damit eine deutliche Verbesserung des Weißgrades. Außerdem erhält man Teilchen mit einem deutlich größeren Hohlraum. Der Weißgrad der Polymerisatteilchen ist größer als 70, bevorzugt größer als 79.

Die nach dem erfindungsgemäßen Verfahren erhältliche wässrige Polymerdispersion hat einen inneren Wassergehalt von 20 % bis 40 %, besonders 25 % bis 35 %, bezogen auf den Gesamtwassergehalt der Dispersion.

Der relative innere Wassergehalt ist der Anteil der Wasserpopulation im inneren der Kern-Schale-Teilchen bezogen auf den Gesamtwassergehalt der Probe. Der innere Wassergehalt kann durch ein gepulstes Feldgradienten-$^1$H-NMR-Experiment bestimmt werden. Die Messmethode wird im Beispielteil näher beschrieben.

Werden die erfindungsgemäß erhältlichen Polymerdispersionen für den Anstrich verwendet, sollte die mittlere Endteilchengröße 100 bis 600 nm betragen, für die Anwendung im Papier und in der Kosmetik 200 bis 2500 nm und für Schäume 300 bis 800 nm.

Im Anstrich können üblicherweise eingesetzte Pigmente, speziell $TiO_2$, vollständig oder teilweise durch die hier beschriebene und nach dem erfindungsgemäßen Verfahren erhältlichen Polymerdispersionen ersetzt werden. Typischerweise enthalten solche Anstrichmittel u. a. Wasser, Verdickungsmittel, Base, Pigmentverteiler, Assoziativverdicker, Entschäumer, Biozid, Bindemittel sowie Filmbildehilfsmittel.

Die nach dem erfindungsgemäßen Verfahren erhältlichen Polymerdispersionen können für ähnliche Anwendungen in anderen Beschichtungen, bestehend aus harzartigen Kondensationsprodukten, wie Phenolate und Aminoplaste, beispielsweise Harnstoffformaldehyd und Melaminformaldehyd, verwendet werden. Ebenso ist die Verwendung in weiteren Beschichtungen, basierend auf wasserdispergierbaren Alkyden, Polyurethanen, Polyestern, Ethylenvinylacetaten sowie Styrolbutadien möglich.

Der Einsatz der nach dem erfindungsgemäßen Verfahren erhältlichen Polymerdispersionen in Papierbeschichtungen führt zu einer Erhöhung des Papierglanzes. Das lässt sich auf die, anders als bei anorganischen Pigmenten, unter Druck verformbare Hülle zurückführen. Auch die Papierdruckqualität wird gesteigert. Der Austausch von anorganischen Pigmenten gegen die hier beschriebenen, nach dem erfindungsgemäßen Verfahren erhältlichen Polymerdispersionen führt zu einer Erniedrigung der Dichte der Beschichtung und somit zu leichterem Papier.

In Kosmetika können die nach dem erfindungsgemäßen Verfahren erhältlichen Polymerdispersionen beispielsweise in Sonnenschutzcremes zur Verstärkung des Lichtschutzes eingesetzt werden. Durch die außergewöhnlichen Lichtstreueigenschaften wird die Wahrscheinlichkeit der Absorbierung von UV-Strahlung durch UV-aktive Substanzen in der Sonnencreme erhöht.

Die nach dem erfindungsgemäßen Verfahren erhältlichen Polymerdispersionen können weiterhin in Schäumen, Pflanzenschutzmitteln, thermoplastischen Formmassen und Tinten eingesetzt werden.

Ein Gegenstand der Erfindung ist wässrige Polymerdispersion erhältlich durch das erfindungsgemäße Verfahren wie zuvor beschrieben.

Ein weiterer Gegenstand der Erfindung ist die Verwendung der erfindungsgemäßen wässrigen Polymerdispersion in Anstrichmitteln, Papierbeschichtungen, Schäumen, Pflanzenschutzmitteln, kosmetischen Mitteln, Tinten oder thermoplastischen Formmassen.

Ein weiterer Gegenstand der Erfindung ist die Verwendung der erfindungsgemäßen wässrigen Polymerdispersion zur Erhöhung des Weißgrades in Anstrichmitteln.

Ein weiterer Gegenstand der Erfindung sind Anstrichmittel, enthaltend eine wässrige Polymerdispersion erhältlich nach dem erfindungsgemäßen Verfahren.

Ein weiterer Gegenstand der Erfindung ist ein Anstrichmittel in Form einer wässrigen Zusammensetzung, enthaltend

a) Wässrige Polymerdispersion bzw. Emulsionspolymerteilchen wie zuvor definiert,
b) wenigstens ein filmbildendes Polymer,
c) gegebenenfalls organische Füllstoffe oder anorganische Füllstoffe und/oder
d) gegebenenfalls weitere organisches Pigmente oder anorganische Pigmente,
e) gegebenenfalls wenigstens ein übliches Hilfsmittel, und
f) Wasser.

Geeignete filmbildende Polymere können wässrige Emulsionspolymerisate basierend auf Reinacrylatpolymeren bzw. Styrolacrylatpolymere sein sowie alle weiteren filmbildende Polymere für Beschichtungen, bestehend aus harzartigen Kondensationsprodukten, beinhaltend Phenolate und Aminoplaste sowie beinhaltend Harnstoffformaldehyd und Melaminformaldehyd. Ebenso ist die Verwendung von weiteren Polymeren basierend auf wasserdispergierbaren Alkyden, Polyurethanen, Polyestern, Ethylenvinylacetaten sowie Styrolbutadien möglich.

Geeignete Füllstoffe in Klarlacksystemen sind z. B. Mattierungsmittel, die so gewünscht den Glanz stark beeinträchtigen. Mattierungsmittel sind in der Regel transparent und können sowohl organisch als auch anorganisch sein. Anorganische Füllstoffe auf Basis von Silika sind am besten geeignet und sind weit verbreitet im Handel erhältlich. Beispiele sind die Syloid®-Marken von W.R. Grace & Company und die Acematt®-Marken von der Fa. Evonik Industries AG. Organische Mattierungsmittel sind z. B. erhältlich von der Fa. BYK-Chemie GmbH unter den Ceraflour®- und den Ceramat®-Marken, von der Fa. Deuteron GmbH unter der Deuteron MK®-Marke. Andere geeignete Füllstoffe für Dispersionsfarben sind Alumosilicate, wie Feldspäte, Silicate, wie Kaolin, Talkum, Glimmer, Magnesit, Erdalkalicarbonate, wie Calciumcarbonat, beispielsweise in Form von Calcit oder Kreide, Magnesiumcarbonat, Dolomit, Erdalkalisulfate, wie Calciumsulfat, Siliciumdioxid, etc. In Anstrichmitteln werden naturgemäß feinteilige Füllstoffe bevorzugt. Die Füllstoffe können als Einzelkomponenten eingesetzt werden. In der Praxis haben sich jedoch Füllstoffmischungen besonders bewährt, z. B. Calciumcarbonat/Kaolin, Calciumcarbonat/Talkum. Glänzende Anstrichmittel weisen in der Regel nur geringe Mengen sehr feinteiliger Füllstoffe auf oder enthalten keine Füllstoffe.

Feinteilige Füllstoffe können auch zur Erhöhung der Deckkraft und/oder zur Einsparung von Weißpigmenten eingesetzt werden. Zur Einstellung der Deckkraft des Farbtons und der Farbtiefe werden vorzugsweise Abmischungen aus Farbpigmenten und Füllstoffen eingesetzt.

Geeignete Pigmente sind beispielsweise anorganische Weißpigmente, wie Titandioxid, vorzugsweise in der Rutilform, Bariumsulfat, Zinkoxid, Zinksulfid, basisches Bleicarbonat, Antimontrioxid, Lithopone (Zinksulfid + Bariumsulfat) oder farbige Pigmente, beispielsweise Eisenoxide, Ruß, Graphit, Zinkgelb, Zinkgrün, Ultramarin, Manganschwarz, Antimonschwarz, Manganviolett, Pariser Blau oder Schweinfurter Grün. Neben den anorganischen Pigmenten können die erfindungsgemäßen Dispersionsfarben auch organische Farbpigmente, z. B. Sepia, Gummigutt, Kasseler Braun, Toluidinrot, Pararot, Hansagelb, Indigo, Azofarbstoffe, anthrachinoide und indigoide Farbstoffe sowie Dioxazin, Chinacridon-, Phthalocyanin-, Isoindolinon- und Metallkomplexpigmente enthalten. Weiterhin geeignet sind die Luconyl®-Marken der Fa. BASF SE, wie z. B. das Luconyl®-Gelb, Luconyl®-Braun und Luconyl®-Rot, insbesondere die transparenten Varianten.

Zu den üblichen Hilfsmitteln zählen Netz- oder Dispergiermittel, wie Natrium-, Kalium- oder Ammoniumpolyphosphate, Alkalimetall- und Ammoniumsalze von Acrylsäure- oder Maleinsäureanhydridcopolymeren, Polyphosphonate, wie 1-Hydroxyethan-1,1-diphosphonsaures Natrium sowie Naphthalinsulfonsäuresalze, insbesondere deren Natriumsalze.

Wichtiger sind die Filmbildehilfsmittel, die Verdicker und Entschäumer. Geeignete Filmbildehilfsmittel sind z. B. Texanol® von der Fa. Eastman Chemicals und die Glykolether und -Ester, z. B. im Handel erhältlich von BASF SE, unter den Namen Solvenon® und Lusolvan®, und von Dow Chemicals unter den Handelsnamen Dowanol®. Die Menge beträgt vorzugsweise < 10 Gew.-% und besonders bevorzugt < 5 Gew.-% auf die Gesamtformulierung. Es ist auch möglich, völlig ohne Lösemittel zu formulieren.

Weitere geeignete Hilfsmittel sind Verlaufsmittel, Entschäumer, Biozide und Verdicker. Geeignete Verdicker sind z. B. Assoziativverdicker, wie Polyurethanverdicker. Die Menge des Verdickers beträgt vorzugsweise weniger als 2,5 Gew.-%, besonders bevorzugt weniger als 1,5 Gew.-% Verdicker, bezogen auf den Feststoffgehalt des Anstrichmittels. Weitere Formulierungshinweise für Holzanstriche sind ausführlich beschrieben in "water-based acrylates for decorative coatings" von den Autoren M. Schwartz und R. Baumstark, ISBN 3-87870-726-6.

Die Herstellung der erfindungsgemäßen Anstrichmittel erfolgt in bekannter Weise durch Abmischen der Komponenten in hierfür üblichen Mischvorrichtungen. Es hat sich bewährt, aus den Pigmenten, Wasser und gegebenenfalls

den Hilfsmitteln eine wässrige Paste oder Dispersion zu bereiten und anschließend erst das polymere Bindemittel, d. h. in der Regel die wässrige Dispersion des Polymeren mit der Pigmentpaste bzw. Pigmentdispersion, zu vermischen.

Das erfindungsgemäße Anstrichmittel kann in üblicher Weise auf Substrate aufgebracht werden, z. B. durch Streichen, Spritzen, Tauchen, Rollen, Rakeln.

Die erfindungsgemäßen Anstrichmittel zeichnen sich aus durch einfache Handhabung und gute Verarbeitungseigenschaften sowie durch einen hohen Weißgrad. Die Anstrichmittel sind schadstoffarm. Sie haben gute anwendungstechnische Eigenschaften, z. B. eine gute Wasserfestigkeit, gute Nasshaftung und gute Blockfestigkeit, eine gute Überstreichbarkeit, und sie zeigen beim Auftragen einen guten Verlauf. Das verwendete Arbeitsgerät lässt sich leicht mit Wasser reinigen.

Die Erfindung soll anhand nachfolgender nicht einschränkender Beispiele erläutert werden.

Experimentelle Methoden

Bestimmung der Glasübergangstemperatur

Die Glasübergangstemperaturen wurden durch theoretische Berechnung per Fox-Gleichung (John Wiley & Sons Ltd., Baffins Lane, Chichester, England, 1997) bestimmt, wobei für Polymere mit Carboxylsäuregruppen die Glasübergangstemperatur im protonierten Zustand verwendet wurde.

$$1 /Tg = Wa\ Tga + Wb\ Tgb,$$

wobei

Tga und Tgb = Glasübergangstemperatur von Polymer "a" und "b"
Wa und Wb = Gewichtsanteil von Polymer "a" und "b"

Messung der Partikelgröße

Die Bestimmung der Teilchengrößen erfolgte hierin und in den anhängenden Ansprüchen mit Hilfe der hydrodynamischen Fraktionierung mit einem PSDA (Particle Size Distribution Analyser) der Fa. Polymer Labs. Der verwendete Säulentyp Cartridge PL0850-1020 wurde bei einem Durchfluss von 2 ml•min$^{-1}$ betrieben. Die Proben wurden mit der Eluentlösung bis zu einer Absorption von 0,03 AU•$\mu$l$^{-1}$ verdünnt.

Die Probe wird durch das Größenausschlussprinzip abhängig vom hydrodynamischen Durchmesser eluiert. Das Elutionsmittel enthält 0,2 Gew.-% Dodecylpoly-(ethylen-glycolether)$_{23}$, 0,05 Gew.-% Natriumdodecylsulfat, 0,02 Gew.-% Natriumdihydrogenphosphat und 0,02 Gew.-% Natriumazid in entionisiertem-Wasser. Der pH liegt bei 5,8. Die Elutionszeit wird mit PS-Eichlatices kalibriert. Gemessen wird im Bereich 20 nm bis 1200 nm. Detektiert wird mit einem UV Detektor bei einer Wellenlänge von 254 nm.

Die Teilchengrößenbestimmung kann weiterhin mit Hilfe eines Coulter M4+ (Particle Analyzer) oder mit Hilfe der Photonenkorrelationsspektroskopie, auch als quasielastische Lichtstreuung oder dynamische Lichtstreuung bekannt (ISO 13321-Norm), mit einem HPPS (High Performance Particle Sizer) der Fa. Malvern erfolgen.

Durchführung der Weißgradmessung

In einem Gefäß werden 6 g der unten beschriebenen Farbpaste und 1,04 g der ca. 30%igen Hohlteilchendispersion abgewogen, die Mischung wird - ohne Luft einzurühren - homogenisiert. Mit Hilfe eines 200 $\mu$m-Rakels wird mit einer Geschwindigkeit von 0,9 cm/sec ein Film dieser Mischung auf eine schwarze Kunststoff-Folie (matte Ausführung, Artikel-Nr. 13.41 EG 870934001, Bernd Schwegmann GmbH & Co. KG, DE) ausgezogen. Die Proben werden bei 23 °C und einer relativen Luftfeuchtigkeit von 40 bis 50 % 24 h getrocknet. Im Anschluss daran wird mit einem Spektrophotometer der Marke "Minolta CM-508i" der Weißgrad an drei verschiedenen Stellen gemessen. Die Messpunkte werden markiert, um in der Folge mit einer Mikrometerschraube die entsprechenden Schichtdicken des Farbfilms durch Differenzmessung relativ zur unbeschichteten Kunststoff-Folie zu bestimmen. Nach Berechnung einer durchschnittlichen Schichtdicke sowie eines durchschnittlichen Weißgrades aus den drei Einzelmessungen erfolgt schlussendlich eine Normierung des dabei erhaltenen Weißgrades auf eine Trockenschichtdicke von 50 $\mu$m durch lineare Extrapolation. Die hierfür nötige Kalibrierung erfolgte durch Weißgradmessung einer Standard-Hohlteilchendispersion in einem Trockenschichtdicken-Bereich von ca. 30 bis 60 $\mu$m.

Herstellung der Farbpaste

In einem Gefäß werden 185 g Wasser vorgelegt und danach die folgenden Einsatzstoffe in der angegebenen Reihenfolge unter einem Dissolver bei ca. 1000 upm zugegeben und für insgesamt ca. 15 Minuten bis zur Homogenität gerührt:

2 g 20%ige Natronlauge, 12 g Pigmentverteiler® MD 20 (Copolymer aus Maleinsäure und Diisobutylen der Firma BASF SE), 6 g Agitan® E 255 (Siloxan-Entschäumer der Firma Münzing Chemie GmbH), 725 g Acronal® A 684 (Bindemittel, 50%ige Dispersion der Firma BASF SE), 40 g Texanol® (Filmbildehilfsmittel der Firma Eastman Chemical Company), 4 g Agitan® E 255 (Siloxan-Entschäumer der Firma Münzing Chemie GmbH),
25 g DSX 3000 (30%ig, assoziativ Verdicker: hydrophobic modified polyether (HMPE) der Firma BASF SE) und 2 g DSX 3801 (45%ig assoziativ Verdicker: hydrophobic modified ethoxylated urethane (HEUR) der Firma BASF SE)

Bestimmung des inneren Wassergehalts

Der relative innere Wassergehalt, also der Anteil der Wasserpopulation im Inneren der Kern-Schale-Teilchen bezogen auf den Gesamtwassergehalt der Probe, kann durch ein gepulstes Feldgradienten-$^1$H-NMR-Experiment (Pulsed-Field-Gradient Nuclear-Magnetic Resonance, PFG-NMR) beschrieben werden. In einem System, in dem die innere und äußere Wasserpopulation diffusivem Austausch unterworfen sind, kann eine exakte Bestimmung mittels Variation der Diffusionszeiten nach Kärger (Annalen der Physik, 7. Folge, Band 27, Heft 1, 1971, S. 107-109) erfolgen. Eine lineare Näherung dieses Austauschmodells ist möglich im Bereich, für den die wirksame Diffusionszeit $\Delta$ der PFG-NMR Signalabschwächung sehr viel kleiner ist als die Austauschzeit zwischen den Reservoirs. Im beschriebenen System ist dies z. B. bei Variation von $\Delta$ zwischen 7 und 10 ms der Fall, wobei der tatsächliche innere Wassergehalt aus der Extrapolation zu 0 ms bestimmt werden kann. Eine Voraussetzung ist, dass hinreichend starke Gradientenfelder zur Verfügung stehen. Im Falle ähnlicher Austauschzeiten kann ein Vergleich des inneren Wassergehalts näherungsweise auch durch einen Vergleich von Messungen bei einer einzelnen kurzen Diffusionszeit erfolgen. Im vorliegenden Fall wurden die Vergleiche zwischen ähnlichen Polymerisaten mit einer Diffusionszeit von $\Delta$ = 7 ms unter Variation der Gradientenfeldstärken g bis 800 G/cm bei effektiver Gradientenpulsdauer $\delta$ = 1 ms unter Einsatz einer stimulierten Gradienten-Echo-Pulssequenz (Steijskal & Tanner, J. Chem. Phys., 1965, Vol. 42, S. 288ff) an einem kommerziell erhältlichen Hochfeld-NMR-System (Bruker Biospin, Rheinstetten/Deutschland) durchgeführt. Die Integration des Wassersignals erfolgte von 5,8 bis 3,7 ppm relativ zu dem intern auf 4,7 ppm referenzierten Maximum des Wassersignals. Die relativen Signalanteile von innerem und äußerem Wasser leiteten sich aus den Vorfaktoren eines bi-exponentiellen Fits am Gradienten-abhängigen PFG-NMR-Signalabfall ab, wobei die Summe der beiden Vorfaktoren normiert wurde. Die gefitteten effektiven Diffusionskoeffizienten in unserem Beispiel lagen in der Größenordnung von $2 \cdot 10^{-9}$ $m^2/s$ für äußeres Wasser und 5 $10^{-12}$ $m^2/s$ für inneres Wasser. Der Fehler der Bestimmung des inneren Wassergehalts lag bei etwa 1 %, bezogen auf 100 % Gesamtwassergehalt.

Beispiele:

Ausgangsmaterial:

| | |
|---|---|
| Emulgator 1: | Alkylpolyglycolethersulfate (30%ig), Disponil®FES 993 |
| Emulgator 2: | Alkyl-benzolsulfonat, Disponil® LDBS 20 |
| Polysiloxan 1: | Polysiloxan -Polyalkylenoxid-graft-Copolymere, EFKA® 3031 (Lösungsmittelfrei, BASF SE) |
| Polysiloxan 2: | Polysiloxan -Polyalkylenoxid-graft-Copolymere, EFKA® 3288 |
| Polysiloxan 3: | polyethermodifizierten Polysiloxan, PulpSil® 955S |
| Biozid: | Acticid® MV (Thor) |
| Natriumhydroxymethansulfinat: | Rongalit-C |

Herstellung der Kern-Schale-Teilchen:

Beispiel 1

Saat-Dispersion A1:

Die Vorlage, bestehend aus 778,75 g Wasser, 35 g Emulgator 1 (30%ig), wurde in einem Polymerisationsgefäß, welches mit einem Ankerrührer, Rückflusskühler und zwei Zulaufgefäßen ausgestattet war, in einer Stickstoffatmosphäre auf eine Temperatur von 80 °C geheizt. Bei Erreichen der Temperatur wurden eine Lösung aus 402,5 g Wasser, 5,83 g Emulgator 1 (30%ig) und 105 g Polysiloxan 1 in 10 min zur Vorlage dosiert. Das Zulaufgefäß wurde nach Zulaufende mit 17,5 g Wasser in die Vorlage gespült. Anschließend wurden 67,2 g einer 2,5 Gew.-% wässrigen Natriumperoxodisulfat-Lösung zugegeben. Nach 5 min wurde eine Voremulsion, bestehend aus 123,94 g Wasser, 11,67 g Emulgator 1 (30%ig), 240,45 g Methylmethacrylat und 4,55 g Methacrylsäure zusammen mit 2,8 g einer 25 Gew.-% wässrigen Ammoniak-Lösung, in 1 h bei 80 °C zudosiert. Das Zulaufgefäß wurde nach Zulaufende mit 17,5 g Wasser in die Vorlage gespült. Anschließend wurden noch 45 min polymerisiert. Nach Abkühlen auf Raumtemperatur wurden 6 g Biozid sowie 22,5 g Spülwasser zugegeben.
Feststoffgehalt: 20,0 %
Teilchengröße (PSDA, median): 52 nm
pH-Wert: 6,5

Beispiel 2

Dispersion (Quellkern) B1

Die Vorlage, bestehend aus 619,4 g Wasser, wurde in einem Polymerisationsgefäß, welches mit einem Ankerrührer, Rückflusskühler und zwei Zulaufgefäßen ausgestattet war, in einer Stickstoffatmosphäre auf eine Temperatur von 85 °C geheizt. Nach Erreichen der Temperatur wurden 12,21 g einer 7 Gew.-% Natriumperoxodisulfat-Lösung in 2 min zugegeben, gefolgt von 118,13 g der Saatdispersion A1. Das Zulaufgefäß wurde nach Zulaufende mit 11,25 g Wasser in die Vorlage gespült. Anschließend wurde eine Voremulsion, bestehend aus 159,75 g Wasser, 19,5 g Emulgator 1 (30%ig), 324 g Methylmethacrylat und 126 g Methacrylsäure innerhalb von 120 min bei 85 °C zudosiert.
Abschließend wurde das Zulaufgefäß mit 22,5 g Wasser gespült und weitere 30 min nachpolymerisiert.
Feststoffgehalt: 33,6 %
pH-Wert: 3,1
Teilchengröße (PSDA, Volumen median): 157 nm

Beispiel 3

Hohlteilchendispersion C1

Die Vorlage, bestehend aus 421,12 g Wasser und 107,69 g von Dispersion B1, wurde in einem Polymerisationsgefäß, welches mit einem Ankerrührer, Rückflusskühler und zwei Zulaufgefäßen ausgestattet war, in einer Stickstoffatmosphäre auf eine Temperatur von 81 °C geheizt. Nach Zugabe von 25,2 g einer 1,4 Gew.-% Natriumperoxodisulfat-Lösung wurde die Voremulsion 1, bestehend aus 22 g Wasser, 2,2 g Emulgator 2, 29,79 g Methylmethacrylat, 5,37 g n-Butylmethacrylat und 0,77 g Methacrylsäure innerhalb von 60 min zudosiert. Anschließend wurde die Voremulsion 2, bestehend aus 112,2 g Wasser, 14,96 g Emulgator 2, 2,2 g Leinölfettsäuren, 3,74 g Allylmethacrylat und 252,3 g Styrol, zusammen mit 26,75 g einer 2,5 Gew.-% Natriumperoxodisulfat-Lösung innerhalb von 120 min zudosiert. Nach Ende der Zuläufe wurden 3,36 g einer 2,5 Gew.-% Natriumperoxodisulfat-Lösung zugegeben und die Innentemperatur über 40 min auf 92 °C erhöht. Anschließend wurden in 10 min 26,14 g $\alpha$-Methylstyrol zugegeben. Nach weiteren 20 min Rühren wurden in 20 min 243 g einer 2,5 Gew.-% Natriumhydroxid-Lösung zudosiert und für 20 min eingerührt. Anschließend wurde über 15 min die Voremulsion 3, bestehend aus 44 g Wasser, 7 g Emulgator 2, 0,31 g Methacrylsäure und 79,8 g Styrol zudosiert. Fünf Minuten nach Zulauf-Ende wurden 5,64 g einer 10 Gew.-% wässrigen Lösung von *tert*.-Butylhydroperoxid zugegeben und über 20 min 31 g einer 3 Gew.-% wässrigen Natriumhydroxymethansulfinat-Lösung zudosiert. 30 Minuten nach Zulauf-Ende wurden erneut 9,16 g einer 10 Gew.-% wässrigen Lösung von *tert*.-Butylhydroperoxid und 8,52 g einer 5,1 Gew.-% wässrigen Natriumhydroxymethansulfinat-Lösung parallel über 60 min zudosiert.
Feststoffgehalt: 31,3 %
pH-Wert: 9,0
Teilchengröße (PSDA, Volumen median): 413 nm

Weißgrad: 81,5

Beispiele 4 - 8

Es wurde weitere Saatdispersionen analog Beispiel 1 hergestellt, bei denen das eingesetzte Additiv sowie die Emulgatormengen variiert wurden. Die Änderungen können der nachstehenden Tabelle entnommen werden:

| Bsp. | Additive / pphm* | | Menge Emulgator 1 / pphm | | Teilchengröße (PSDA, median) / nm | pH |
|---|---|---|---|---|---|---|
| | | | Vorlage | Additiv Lsg. | | |
| 4 | Polysiloxan 1 | 30 | 3,00 | 0,10 | 88 | 6,5 |
| 5 | Polysiloxan 1 | 30 | 3,00 | 1,00 | 42 | 6,4 |
| 6 | Polysiloxan 1 | 30 | 3,00 | 2,00 | 38 | 6,4 |
| 7 | Polysiloxan 2 | 30 | 3,00 | 0,50 | 41 | 7,1 |
| 8 | Polysiloxan 3 | 30 | 3,00 | 0,50 | 65 | 6,3 |
| * parts per hundred monomers (Das verwendete Additiv wird als Monomer gerechnet.) | | | | | | |

Beispiele 9 - 21

Es wurden weitere Quellkerndispersionen analog Beispiel 2 hergestellt. Dabei wurde neben der Menge und Teilchengröße der verwendeten Saat, die Menge an Initiator variiert sowie zusätzlicher Emulgator in die Vorlage gegeben.

| Bsp. | Saat / pphm | | NaPS[a)] / pphm | Emulgator 1 in Vorlage / pphm | Teilchengröße (PSDA, median) / nm |
|---|---|---|---|---|---|
| 9 | Bsp. 1 | 4,5 | 0,19 | --- | 168 |
| 10 | Bsp. 1 | 5,0 | 0,19 | --- | 162 |
| 11 | Bsp. 1 | 5,5 | 0,19 | --- | 159 |
| 12 | Bsp. 1 | 6,0 | 0,19 | --- | 155 |
| 13 | Bsp. 6 | 1,5 | 0,19 | --- | 179 |
| 14 | Bsp. 6 | 2,0 | 0,19 | --- | 162 |
| 15 | Bsp. 6 | 2,5 | 0,19 | --- | 149 |
| 16 | Bsp. 6 | 3,0 | 0,19 | --- | 139 |
| 17 | Bsp. 1 | 5,5 | 0,40 | --- | 159 |
| 18 | Bsp. 1 | 5,5 | 0,05/0,1 [b)] | --- | 159 |
| 19 | Bsp. 1 | 5,5 | 0,19 | 0,05 | 159 |
| 20 | Bsp. 1 | 5,5 | 0,19[c)] | --- | 159 |
| 21 | Bsp. 1[d)] | 5,5 | 0,19 | --- | 165 |
| [a)] Natriumperoxodisulfat<br>[b)] 0,05 pphm NaPS initial, 0,1 pphm parallel zum Zulauf dosiert<br>[c)] nach Saat zugegeben<br>[d)] 6 Wochen bei 50 °C gelagert | | | | | |

Vergleichsbeispiel 1

Dispersion (Quellkern) BV1

Die Vorlage, bestehend aus 477,7 g Wasser, 1,51 g Emulgator 1 und 12,16 g Polysiloxan 1 wurde in einem Polymerisationsgefäß, welches mit einem Ankerrührer, Rückflusskühler und zwei Zulaufgefäßen ausgestattet war, in einer Stickstoffatmosphäre auf eine Temperatur von 82 °C geheizt. Anschließend wurde die Voremulsion 1, bestehend

aus 73,92 g Wasser, 0,25 g Emulgator 1, 25,54 g Methylmethacrylat und 0,34 g Methacrylsäure und 14,55 g einer 7 Gew.-% Natriumperoxodisulfat-Lösung zugegeben und für 30 min polymerisiert, wobei die Temperatur innerhalb des Polymerisationsgefäßes auf 85 °C eingestellt wurde. Im Anschluss daran wurde die Voremulsion 2, bestehend aus 555,01 g Wasser, 24,93 g Emulgator 1, 332,32 g Methylmethacrylat und 153,34 g Methacrylsäure, innerhalb von 120 min bei 85 °C zudosiert. Abschließend wurde das Zulaufgefäß mit 10 g Wasser gespült und weitere 15 min nachpolymerisiert.
Feststoffgehalt: 33,3 %
pH-Wert: 3,1
Teilchengröße (PSDA, Volumen median): 140 nm

Vergleichsbeispiele 2 bis 6:

Es wurden weitere Quellkerndispersionen analog Vergleichsbeispiel 1 hergestellt, dabei wurde neben dem Additiv die Menge an Initiator und Emulgator in die Vorlage variiert.

| V.-Bsp. | Additiv / pphm | | NaPS / pphm | Emulagtor 1 in Vorlage / pphm | Teilchengröße (PSDA, median) / nm |
|---|---|---|---|---|---|
| 2 | Polysiloxan 2 | 2,21 | 0,19 | 0,08 | 110 |
| 3 | Polysiloxan 3 | 2,21 | 0,19 | 0,08 | 175 |
| 4 | Polysiloxan 1 | 2,21 | 0,19 | 0,09 | 131 |
| 5 | Polysiloxan 1 | 2,21 | 0,09/0,2 [a)] | 0,08 | 123 |
| 6 | Polysiloxan 1 | 2,21 | 0,40 | 0,08 | 178 |
| [a)] 0,09 pphm NaPS initial, 0,2 pphm parallel zum Zulauf dosiert | | | | | |

Beispiel 22 und Vergleichsbeispiel 7:

Es wurden zwei weitere Hohlteilchendispersionen analog Beispiel 3 hergestellt, bei denen zuvor die verwendete Saat bzw. der verwendete Quellkern für sechs Wochen bei 50 °C gelagert wurde.

| | Quellkerndipsersion | Teilchengröße (PSDA, median) / nm | pH | Weißgrad |
|---|---|---|---|---|
| Bsp. 22 | Bsp. 21 | 425 | 9,2 | 81,7 |
| V.-Bsp. 7 | V.-Bsp.1 | 406 (multimodal) | 8,3 | 75,0 |

**Patentansprüche**

1. Verfahren zur Herstellung einer wässrigen Dispersion von Polymerteilchen durch radikalische wässrige Emulsionspolymerisation, umfassend die folgenden Schritte:

   i) Herstellung einer wässrigen Dispersion eines Saatpolymers durch radikalische wässrige Emulsionspolymerisation einer wässrigen Monomeremulsion, enthaltend:

      a) 25,0 bis 99,9 Gew.-% mindestens eines nicht-ionischen, monoethylenisch ungesättigten Monomeren M1 mit einer Wasserlöslichkeit ≤ 50 g/L bei 20 °C, bezogen auf das Gesamtgewicht der in Schritt i) eingesetzten Monomere und der polyalkylenoxid-haltigen Substanz,
      b) 0 bis 15,0 Gew.-% eines oder mehrerer monoethylenisch ungesättigter Monomere M2, ausgewählt unter Monomeren M2a, die wenigstens eine anionische oder anionogene Gruppe tragen und neutralen Monomeren M2b, die eine Wasserlöslichkeit von > 50 g/L bei 20 °C aufweisen, und deren Gemischen, bezogen auf das Gesamtgewicht der in Schritt i) eingesetzten Monomere und der polyalkylenoxid-haltigen Substanz und
      c) 0,1 bis 60,0 Gew.-% mindestens einer polyalkylenoxid-haltigen Substanz, bezogen auf das Gesamtgewicht der in Schritt i) eingesetzten Monomere und der polyalkylenoxid-haltigen Substanz;

   ii) Herstellung einer wässrigen Dispersion einer Quellsaat durch radikalische wässrige Emulsionspolymerisation

einer wässrigen Suspoemulsion, enthaltend:

d) 5 bis 99,9 Gew.-% mindestens eines nicht-ionischen, monoethylenisch ungesättigten Monomers M3 mit einer Wasserlöslichkeit $\leq$ 50 g/L bei 20 °C, bezogen auf das Gesamtgewicht der in Schritt ii) eingesetzten Monomere und des Saatpolymers aus Schritt i),
e) 0 bis 75,0 Gew.-% eines oder mehrerer monoethylenisch ungesättigter Monomere M4, ausgewählt unter Monomeren M4a, die wenigstens eine anionische oder anionogene Gruppe tragen und neutralen Monomeren M4b, die eine Wasserlöslichkeit von > 50 g/L bei 20 °C aufweisen, und deren Gemischen, bezogen auf das Gesamtgewicht der in Schritt ii) eingesetzten Monomere und des Saatpolymers aus Schritt i), und
f) 0,1 bis 20,0 Gew.-% des in Schritt i) erhaltenen Saatpolymers, bezogen auf das Gesamtgewicht der in Schritt ii) eingesetzten Monomere und des Saatpolymers aus Schritt i);

iii) anschließende Bildung wenigstens einer Polymerschale durch radikalische wässrige Emulsionspolymerisation von schalenbildenden Monomeren M5 in Gegenwart von der in Schritt ii) erhaltenen Quellsaat unter Bildung von einer wässrigen Dispersion von Emulsionspolymerteilchen; und
iv) anschließende Neutralisation der in Schritt iii) erhaltenen wässrigen Dispersion auf einem pH-Wert von mindestens 7,5 mit mindestens einer Base.

**2.** Verfahren gemäß Anspruch 1, wobei der Volumenmedian der Teilchengröße des Saatpolymers, bestimmt durch hydrodynamische Fraktionierung, im ungequollenen Zustand im Bereich von 10 bis 100 nm liegt.

**3.** Verfahren gemäß Anspruch 1 oder 2, wobei der Volumenmedian der Teilchengröße der Quellsaat, bestimmt durch hydrodynamische Fraktionierung, im ungequollenen Zustand im Bereich von 50 bis 300 nm liegt.

**4.** Verfahren nach einem der vorhergehenden Ansprüche, wobei die polyalkylenoxid-haltige Substanz ausgewählt ist aus der Gruppe der Polysiloxan-Polyalkylenoxid-Copolymere, insbesondere sind die Polysiloxan-Polyalkylenoxid-Copolymere ausgewählt aus der Gruppe der Polysiloxan-Polyalkylenoxid-graft-Pfropfcopolymere, der Polysiloxan-Polyalkylenoxid-graft-Copolymere mit $\alpha$-$\omega$-Struktur und deren Gemischen davon, im speziellen sind die Polysiloxan-Polyalkylenoxid-Copolymere ausgewählt aus der Gruppe der Polysiloxan-Polyalkylenoxid-graft-Pfropfcopolymere der allgemeinen Formel (I):

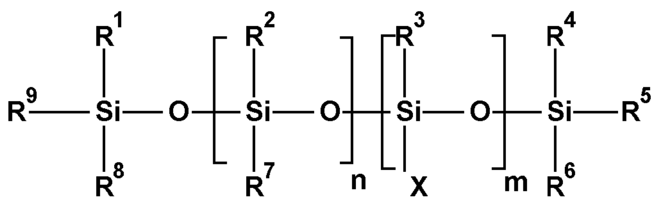

wobei

$R^1$, $R^2$, $R^3$, $R^4$, $R^5$, $R^6$, $R^7$, $R^8$, $R^9$ stehen unabhängig voneinander H oder Alkyl, OH, O-Alkyl, Allyl, O-Allyl, Phenyl oder Alkylester;
n 0 bis 1000 bedeutet;
m 1 bis 100 bedeutet;
X weist die folgende Struktur der Formel (Ia) auf:

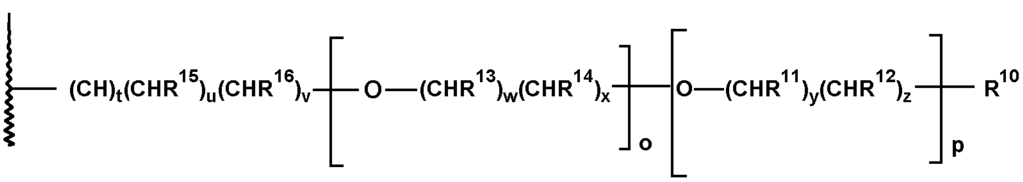

(Ia),

wobei

$R^{10}$ steht für OH, O-Alkyl, O-Allyl, O-Phenyl oder einen Alkylester;
$R^{11}$, $R^{12}$, $R^{13}$, $R^{14}$, $R^{15}$, $R^{16}$ stehen unabhängig voneinander für H, Alkyl oder Phenyl;
o steht für 0 - 100;
p steht für 1 - 100;
t bedeutet 0 oder 2;
u bedeutet 0 - 10;
v bedeutet 0 - 10;
w, x, y, z stehen unabhängig voneinander gleich oder verschieden für 1 - 10.

**5.** Verfahren nach einem der vorhergehenden Ansprüche, wobei Schritt iv) in Gegenwart mindestens eines polymerisierbaren Weichmachermonomers erfolgt, welcher anschließend in einem weiteren Schritt v) durch radikalische wässrige Emulsionspolymerisation gegebenenfalls unter Zugabe weiteren schalenbildendem Monomeren M5 polymerisiert wird, insbesondere ist der polymerisierbare Weichmachermonomer ausgewählt ist unter Styrol, α-Methylstyrol, Methyl-2-tert-butylacrylat, 2-Methyl-2-buten, 2,3-Dimethyl-2-buten, 1,1-Diphenylethen, Estern der 2-Phenylacrylsäure, Estern der Atropasäure und deren Gemischen, bevorzugt Styrol oder α-Methylstyrol.

**6.** Verfahren nach einem der vorhergehenden Ansprüche, wobei in einem zusätzlichen Schritt
v) wenigstens eine weitere Schale durch radikalische wässrige Emulsionspolymerisation von schalenbildendem Monomeren M5 in Gegenwart von den in Schritt iii) erhaltenen Emulsionspolymerteilchen gebildet wird.

**7.** Verfahren nach einem der vorhergehenden Ansprüche, wobei das Monomer M1 ausgewählt ist unter Estern monoethylenisch ungesättigter $C_3$-$C_8$-Monocarbonsäuren mit $C_1$-$C_{10}$-Alkanolen, Estern monoethylenisch ungesättigter $C_4$-$C_8$-Dicarbonsäuren mit $C_1$-$C_{10}$-Alkanolen und deren Gemischen, insbesondere Estern der Acrylsäure mit $C_1$-$C_6$-Alkanolen, Estern der Methacrylsäure mit $C_1$-$C_6$-Alkanolen und deren Gemischen.

**8.** Verfahren nach einem der vorhergehenden Ansprüche, wobei das Monomer M2 ausgewählt ist unter monoethylenisch ungesättigten $C_3$-$C_8$-Monocarbonsäuren, deren Salzen und Anhydriden und deren Gemischen.

**9.** Verfahren nach einem der vorhergehenden Ansprüche, wobei das Monomer M3 ausgewählt ist unter Estern monoethylenisch ungesättigter $C_3$-$C_8$-Monocarbonsäuren mit $C_1$-$C_{10}$-Alkanolen, Estern monoethylenisch ungesättigter $C_4$-$C_8$-Dicarbonsäuren mit $C_1$-$C_{10}$-Alkanolen und deren Gemischen, insbesondere Estern der Acrylsäure mit $C_1$-$C_6$-Alkanolen, Estern der Methacrylsäure mit $C_1$-$C_6$-Alkanolen und deren Gemischen.

**10.** Verfahren nach einem der vorhergehenden Ansprüche, wobei das Monomer M4 ausgewählt ist unter monoethylenisch ungesättigten $C_3$-$C_8$-Monocarbonsäuren, deren Salzen und Anhydriden und deren Gemischen.

**11.** Verfahren nach einem der vorhergehenden Ansprüche, wobei die schalenbildenden Monomere in Schritt iii) ausgewählt sind unter nicht-ionischen ethylenisch ungesättigten Monomeren M5-1 mit einer Wasserlöslichkeit $\leq$ 50 g/L bei 20 °C und deren Gemischen mit ethylenisch ungesättigten Monomeren M5-2, ausgewählt unter Monomeren M5-2a, die wenigstens eine anionische oder anionogene Gruppe tragen, und neutralen Monomeren M5-2b, die eine Wasserlöslichkeit von > 50 g/L bei 20 °C aufweisen, und deren Gemischen, insbesondere umfassen die Monomere M5:

g) 25 bis 100,0 Gew.-% mindestens eines Monomers M5-1, bezogen auf das Gesamtgewicht der Monomere M5 und
h) 0 bis 75,0 Gew.-% mindestens eines Monomers M5-2, bezogen auf das Gesamtgewicht der Monomere M5.

**12.** Verfahren nach einem der vorhergehenden Ansprüche, wobei die Monomere M5-1 ausgewählt sind unter Estern monoethylenisch ungesättigten $C_3$-$C_8$-Monocarbonsäuren mit $C_1$-$C_{10}$-Alkanolen, Estern monoethylenisch ungesättigter $C_4$-$C_8$-Dicarbonsäuren mit $C_1$-$C_{10}$-Alkanolen, Vinylaromaten, Estern von Vinyl- oder Allylalkohol mit aliphatischen $C_1$-$C_{10}$-Monocarbonsäuren und deren Gemischen.

**13.** Verfahren nach einem der vorhergehenden Ansprüche, wobei die Monomere M5-2 ausgewählt sind unter monoethylenisch ungesättigten $C_3$-$C_8$-Monocarbonsäuren, deren Salzen und Anhydriden, ungesättigte Fettsäuren und deren Gemischen.

**14.** Wässrige Polymerdispersion, erhältlich durch ein Verfahren gemäß einem der Ansprüche 1 bis 13, insbesondere hat die wässrige Polymerdispersion einen inneren Wassergehalt von 20 % bis 40 %, bezogen auf den Gesamtwassergehalt der Dispersion.

15. Verwendung der wässrigen Polymerdispersion nach Anspruch 14 in Anstrichmitteln, Papierbeschichtungen, Schäumen, Pflanzenschutzmitteln, kosmetischen Mitteln, Tinten oder thermoplastischen Formmassen.

16. Verwendung der wässrigen Polymerdispersion nach Anspruch 14 zur Erhöhung des Weißgrades in Anstrichmitteln.

17. Anstrichmittel, enthaltend eine wässrige Polymerdispersion erhältlich durch ein Verfahren gemäß einem der Ansprüche 1 bis 13.

## Claims

1. A process for preparing an aqueous dispersion of polymer particles by radical aqueous emulsion polymerization, comprising the following steps:

    i) preparing an aqueous dispersion of a seed polymer by radical aqueous emulsion polymerization of an aqueous monomer emulsion comprising:

        a) 25.0 to 99.9 wt% of at least one nonionic, monoethylenically unsaturated monomer M1 having a water-solubility ≤ 50 g/L at 20°C, based on the total weight of the monomers used in step i) and of the polyalkylene oxide-containing substance,
        b) 0 to 15.0 wt% of one or more monoethylenically unsaturated monomers M2, selected from monomers M2a which carry at least one anionic or anionogenic group and neutral monomers M2b which have a water-solubility of > 50 g/L at 20°C, and mixtures thereof, based on the total weight of the monomers used in step i) and of the polyalkylene oxide-containing substance, and
        c) 0.1 to 60.0 wt% of at least one polyalkylene oxide-containing substance, based on the total weight of the monomers used in step i) and of the polyalkylene oxide-containing substance;

    ii) preparing an aqueous dispersion of a swell-seed by radical aqueous emulsion polymerization of an aqueous suspoemulsion comprising:

        d) 5 to 99.9 wt% of at least one nonionic, monoethylenically unsaturated monomer M3 having a water-solubility ≤ 50 g/L at 20°C, based on the total weight of the monomers used in step ii) and of the seed polymer from step i),
        e) 0 to 75.0 wt% of one or more monoethylenically unsaturated monomers M4, selected from monomers M4a which carry at least one anionic or anionogenic group and neutral monomers M4b which have a water-solubility of > 50 g/L at 20°C, and mixtures thereof, based on the total weight of the monomers used in step ii) and of the seed polymer from step i), and
        f) 0.1 to 20.0 wt% of the seed polymer obtained in step i), based on the total weight of the monomers used in step ii) and of the seed polymer from step i);

    iii) subsequently forming at least one polymer shell by radical aqueous emulsion polymerization of shell-forming monomers M5 in the presence of the swell-seed obtained in step ii), to form an aqueous dispersion of emulsion polymer particles; and
    iv) subsequently neutralizing the aqueous dispersion obtained in step iii) to a pH of at least 7.5 with at least one base.

2. The process according to claim 1, wherein the volume median of the particle size of the seed polymer, determined by hydrodynamic fractionation, in the unswollen state is in the range from 10 to 100 nm.

3. The process according to claim 1 or 2, wherein the volume median of the particle size of the swell-seed, determined by hydrodynamic fractionation, in the unswollen state is in the range from 50 to 300 nm.

4. The process according to any of the preceding claims, wherein the polyalkylene oxide-containing substance is selected from the group of polysiloxane-polyalkylene oxide copolymers, more particularly the polysiloxane-polyalkylene oxide copolymers are selected from the group of polysiloxane-polyalkylene oxide graft copolymers, polysiloxane-polyalkylene oxide graft copolymers with $\alpha$-$\omega$ structure, and mixtures thereof, especially the polysiloxane-polyalkylene oxide copolymers are selected from the group of polysiloxane-polyalkylene oxide graft copolymers of the general formula (I):

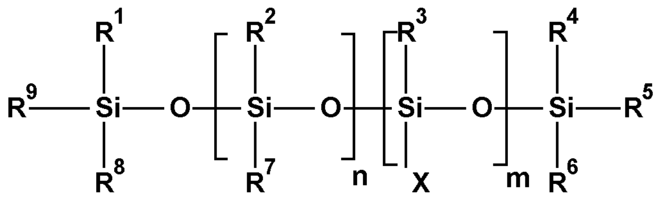

where

$R^1$, $R^2$, $R^3$, $R^4$, $R^5$, $R^6$, $R^7$, $R^8$, $R^9$ independently of one another are H or alkyl, OH, O-alkyl, allyl, O-allyl, phenyl or alkyl ester;
n is 0 to 1000;
m is 1 to 100;
X has the following structure of the formula (Ia) :

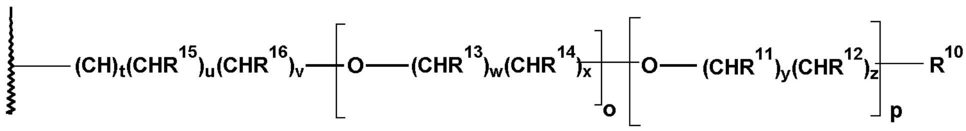

(Ia),

where

$R^{10}$ is OH, O-alkyl, O-allyl, O-phenyl or an alkyl ester;
$R^{11}$, $R^{12}$, $R^{13}$, $R^{14}$, $R^{15}$, $R^{16}$ independently of one another are H, alkyl or phenyl;
o is 0-100;
p is 1-100;
t is 0 or 2;
u is 0-10;
v is 0-10;
w, x, y, z independently of one another, identically or differently, are 1-10.

**5.** The process according to any of the preceding claims, wherein step iv) takes place in the presence of at least one polymerizable plasticizer monomer which is subsequently polymerized in a further step v) by radical aqueous emulsion polymerization, optionally with addition of further shell-forming monomer M5, more particularly the polymerizable plasticizer monomer is selected from styrene, $\alpha$-methylstyrene, methyl 2-tert-butylacrylate, 2-methyl-2-butene, 2,3-dimethyl-2-butene, 1,1-diphenylethene, esters of 2-phenylacrylic acid, esters of atropic acid, and mixtures thereof, preferably styrene or $\alpha$-methylstyrene.

**6.** The process according to any of the preceding claims, wherein in an additional step v) at least one further shell is formed by radical aqueous emulsion polymerization of shell-forming monomer M5 in the presence of the emulsion polymer particles obtained in step iii) .

**7.** The process according to any of the preceding claims, wherein the monomer M1 is selected from esters of monoethylenically unsaturated $C_3$-$C_8$ monocarboxylic acids with $C_1$-$C_{10}$ alkanols, esters of monoethylenically unsaturated $C_4$-$C_8$ dicarboxylic acids with $C_1$-$C_{10}$ alkanols, and mixtures thereof, more particularly esters of acrylic acid with $C_1$-$C_6$ alkanols, esters of methacrylic acid with $C_1$-$C_6$ alkanols, and mixtures thereof.

**8.** The process according to any of the preceding claims, wherein the monomer M2 is selected from monoethylenically unsaturated $C_3$-$C_8$ monocarboxylic acids, their salts and anhydrides, and mixtures thereof.

**9.** The process according to any of the preceding claims, wherein the monomer M3 is selected from esters of mo-

noethylenically unsaturated $C_3$-$C_8$ monocarboxylic acids with $C_1$-$C_{10}$ alkanols, esters of monoethylenically unsaturated $C_4$-$C_8$ dicarboxylic acids with $C_1$-$C_{10}$ alkanols, and mixtures thereof, more particularly esters of acrylic acid with $C_1$-$C_6$ alkanols, esters of methacrylic acid with $C_1$-$C_6$ alkanols, and mixtures thereof.

**10.** The process according to any of the preceding claims, wherein the monomer M4 is selected from monoethylenically unsaturated $C_3$-$C_8$ monocarboxylic acids, their salts and anhydrides, and mixtures thereof.

**11.** The process according to any of the preceding claims, wherein the shell-forming monomers in step iii) are selected from nonionic ethylenically unsaturated monomers M5-1 having a water-solubility ≤ 50 g/L at 20°C and mixtures thereof with ethylenically unsaturated monomers M5-2, selected from monomers M5-2a which carry at least one anionic or anionogenic group and neutral monomers M5-2b which have a water-solubility of > 50 g/L at 20°C, and mixtures thereof, more particularly the monomers M5 comprise:

g) 25 to 100.0 wt% of at least one monomer M5-1, based on the total weight of the monomers M5, and
h) 0 to 75.0 wt% of at least one monomer M5-2, based on the total weight of the monomers M5.

**12.** The process according to any of the preceding claims, wherein the monomers M5-1 are selected from esters of monoethylenically unsaturated $C_3$-$C_8$ monocarboxylic acids with $C_1$-$C_{10}$ alkanols, esters of monoethylenically unsaturated $C_4$-$C_8$ dicarboxylic acids with $C_1$-$C_{10}$ alkanols, vinylaromatics, esters of vinyl alcohol or allyl alcohol with aliphatic $C_1$-$C_{10}$ monocarboxylic acids, and mixtures thereof.

**13.** The process according to any of the preceding claims, wherein the monomers M5-2 are selected from monoethylenically unsaturated $C_3$-$C_8$ monocarboxylic acids, their salts and anhydrides, unsaturated fatty acids, and mixtures thereof.

**14.** An aqueous polymer dispersion obtainable by a process according to any of claims 1 to 13, the aqueous polymer dispersion more particularly having an internal water content of 20% to 40%, based on the total water content of the dispersion.

**15.** The use of the aqueous polymer dispersion according to claim 14 in paints, paper coatings, foams, crop protection compositions, cosmetic compositions, liquid inks, or thermoplastic molding compounds.

**16.** The use of the aqueous polymer dispersion according to claim 14 for increasing the whiteness in paints.

**17.** A paint comprising an aqueous polymer dispersion obtainable by a process according to any of claims 1 to 13.

## Revendications

**1.** Procédé pour la préparation d'une dispersion aqueuse de particules de polymère par polymérisation en émulsion aqueuse radicalaire, comprenant les étapes suivantes :

i) préparation d'une dispersion aqueuse d'un polymère d'ensemencement par polymérisation en émulsion aqueuse radicalaire d'une émulsion aqueuse de monomères, contenant :

a) 25,0 à 99,9 % en poids d'au moins un monomère M1 non ionique, monoéthyléniquement insaturé doté d'une solubilité dans l'eau ≤ 50 g/L à 20 °C, par rapport au poids total des monomères utilisés dans l'étape i) et de la substance contenant un poly(oxyde d'alkylène),
b) 0 à 15,0 % en poids d'un ou plusieurs monomères M2 monoéthyléniquement insaturés, choisis parmi des monomères M2a, qui portent au moins un groupe anionique ou anionogène, et des monomères neutres M2b, qui présentent une solubilité dans l'eau > 50 g/L à 20 °C, et de leurs mélanges, par rapport au poids total des monomères utilisés dans l'étape i) et de la substance contenant un poly(oxyde d'alkylène), et
c) 0,1 à 60,0 % en poids d'au moins une substance contenant un poly(oxyde d'alkylène), par rapport au poids total des monomères utilisés dans l'étape i) et de la substance contenant un poly(oxyde d'alkylène) ;

ii) préparation d'une dispersion aqueuse de semence de gonflement par polymérisation en émulsion aqueuse radicalaire d'une suspoémulsion aqueuse, contenant :

d) 5 à 99,9 % en poids d'au moins un monomère M3 non ionique, monoéthyléniquement insaturé doté d'une solubilité dans l'eau ≤ 50 g/L à 20 °C, par rapport au poids total des monomères utilisés dans l'étape ii) et du polymère d'ensemencement de l'étape i),

e) 0 à 75,0 % en poids d'un ou plusieurs monomères M4 monoéthyléniquement insaturés, choisis parmi des monomères M4a, qui portent au moins un groupe anionique ou anionogène, et des monomères neutres M4b, qui présentent une solubilité dans l'eau > 50 g/L à 20 °C, et de leurs mélanges, par rapport au poids total des monomères utilisés dans l'étape ii) et du polymère d'ensemencement de l'étape i), et

f) 0,1 à 20,0 % en poids du polymère d'ensemencement obtenu dans l'étape i), par rapport au poids total des monomères utilisés dans l'étape ii) et du polymère d'ensemencement de l'étape i) ;

iii) ensuite, formation d'au moins une enveloppe de polymère par polymérisation en émulsion aqueuse radicalaire de monomères M5 de formation d'enveloppe en présence de la semence de gonflement obtenue dans l'étape ii) avec formation d'une dispersion aqueuse de particules de polymère en émulsion ; et

iv) ensuite, neutralisation de la dispersion aqueuse obtenue dans l'étape iii) à une valeur de pH d'au moins 7,5 avec au moins une base.

2. Procédé selon la revendication 1, la médiane de volume de la grosseur de particule du polymère d'ensemencement, déterminée par fractionnement hydrodynamique, se situant à l'état non gonflé dans la plage de 10 à 100 nm.

3. Procédé selon la revendication 1 ou 2, la médiane de volume de la grosseur de particule de la semence de gonflement, déterminée par fractionnement hydrodynamique, se situant à l'état non gonflé dans la plage de 50 à 300 nm.

4. Procédé selon l'une quelconque des revendications précédentes, la substance contenant un poly(oxyde d'alkylène) étant choisie dans le groupe des copolymères de polysiloxane-poly(oxyde d'alkylène), en particulier les copolymères de polysiloxane-poly(oxyde d'alkylène) étant choisis dans le groupe des copolymères greffés de polysiloxane-poly(oxyde d'alkylène), des copolymères greffés de polysiloxane-poly(oxyde d'alkylène) dotés d'une structure $\alpha,\omega$ et des mélanges correspondants, notamment les copolymères de polysiloxane-poly(oxyde d'alkylène) sont choisis dans le groupe des copolymères greffés de polysiloxane-poly(oxyde d'alkylène) de formule générale (I) :

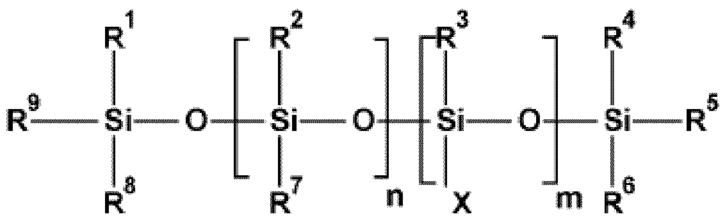

$R^1$, $R^2$, $R^3$, $R^4$, $R^5$, $R^6$, $R^7$, $R^8$, $R^9$ représentant indépendamment les uns des autres H ou alkyle, OH, O-alkyle, allyle, O-allyle, phényle ou ester d'alkyle ;
n signifiant 0 à 1 000 ;
m signifiant 1 à 100 ;
X présentant la structure suivante de formule (Ia) :

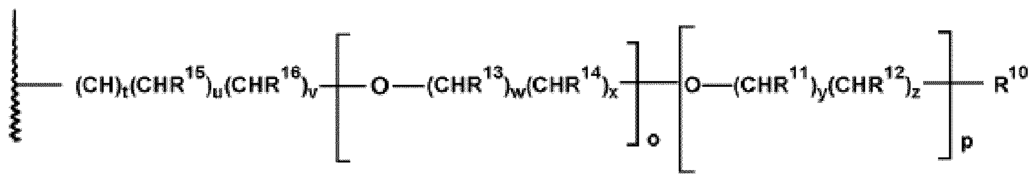

(Ia),

$R^{10}$ représentant OH, O-alkyle, O-allyle, O-phényle ou ester d'alkyle ;
$R^{11}$, $R^{12}$, $R^{13}$, $R^{14}$, $R^{15}$, $R^{16}$ représentant indépendamment les uns des autres H, alkyle ou phényle ;
o représentant 0 à 100 ;
p représentant 1 à 100 ;
t signifiant 0 ou 2 ;
u signifiant 0 à 10 ;

v signifiant 0 à 10 ;
w, x, y, z représentant indépendamment les uns des autres, de manière identique ou différente, 1 à 10.

**5.** Procédé selon l'une quelconque des revendications précédentes, l'étape iv) étant réalisée en présence d'au moins un monomère plastifiant polymérisable, qui ensuite dans une étape supplémentaire v) est polymérisé par polymérisation en émulsion aqueuse radicalaire éventuellement avec ajout de monomères M5 de formation d'enveloppe supplémentaires, en particulier le monomère plastifiant polymérisable étant choisi parmi le styrène, l'$\alpha$-méthylstyrène, le 2-méthylacrylate de tert-butyle, le 2-méthyl-2-butène, le 2,3-diméthyl-2-butène, le 1,1-diphényléthène, des esters de l'acide 2-phénylacrylique, des esters de l'acide atropique et leurs mélanges, préférablement le styrène ou l'$\alpha$-méthylstyrène.

**6.** Procédé selon l'une quelconque des revendications précédentes, dans lequel dans une étape supplémentaire v) au moins une enveloppe supplémentaire est formée par polymérisation en émulsion aqueuse radicalaire de monomères M5 de formation d'enveloppe en présence des particules de polymère en émulsion obtenues dans l'étape iii) .

**7.** Procédé selon l'une quelconque des revendications précédentes, le monomère M1 étant choisi parmi des esters d'acides monocarboxyliques en $C_{3-8}$ monoéthyléniquement insaturés avec des $C_{1-10}$-alcanols, des esters d'acides dicarboxyliques en $C_{4-8}$ monoéthyléniquement insaturés avec des $C_{1-10}$-alcanols et leurs mélanges, en particulier des esters de l'acide acrylique avec des $C_{1-6}$-alcanols, des esters de l'acide méthacrylique avec des $C_{1-6}$-alcanols et leurs mélanges.

**8.** Procédé selon l'une quelconque des revendications précédentes, le monomère M2 étant choisi parmi des acides monocarboxyliques en $C_{3-8}$ monoéthyléniquement insaturés, leurs sels et leurs anhydrides et leurs mélanges.

**9.** Procédé selon l'une quelconque des revendications précédentes, le monomère M3 étant choisi parmi des esters d'acides monocarboxyliques en $C_{3-8}$ monoéthyléniquement insaturés avec des $C_{1-10}$-alcanols, des esters d'acides dicarboxyliques en $C_{4-8}$ monoéthyléniquement insaturés avec des $C_{1-10}$-alcanols et leurs mélanges, en particulier des esters de l'acide acrylique avec des $C_{1-6}$-alcanols, des esters de l'acide méthacrylique avec des $C_{1-6}$-alcanols et leurs mélanges.

**10.** Procédé selon l'une quelconque des revendications précédentes, le monomère M4 étant choisi parmi des acides monocarboxyliques en $C_{3-8}$ monoéthyléniquement insaturés, leurs sels et leurs anhydrides et leurs mélanges.

**11.** Procédé selon l'une quelconque des revendications précédentes, les monomères de formation d'enveloppe dans l'étape iii) étant choisis parmi des monomères M5-1 non ioniques éthyléniquement insaturés dotés d'une solubilité dans l'eau $\leq$ 50 g/L à 20 °C et leurs mélanges avec des monomères M5-2 éthyléniquement insaturés, choisis parmi des monomères M5-2a, qui portent au moins un groupe anionique ou anionogène, et des monomères neutres M5-2b, qui présentent une solubilité dans l'eau > 50 g/L à 20 °C, et leurs mélanges, en particulier comprenant les monomères M5 :

g) 25 à 100,0 % en poids d'au moins un monomère M5-1, par rapport au poids total des monomères M5 et
h) 0 à 75,0 % en poids d'au moins un monomère M5-2, par rapport au poids total des monomères M5.

**12.** Procédé selon l'une quelconque des revendications précédentes, les monomères M5-1 étant choisis parmi des esters d'acides monocarboxyliques en $C_{3-8}$ monoéthyléniquement insaturés avec des $C_{1-10}$-alcanols, des esters d'acides dicarboxyliques en $C_{4-8}$ monoéthyléniquement insaturés avec des $C_{1-10}$-alcanols, des composés aromatiques vinyliques, des esters d'alcool vinylique ou d'alcool allylique avec des acides monocarboxyliques aliphatiques en $C_{1-10}$ et leurs mélanges.

**13.** Procédé selon l'une quelconque des revendications précédentes, les monomères M5-2 étant choisis parmi des acides monocarboxyliques en $C_{3-8}$ monoéthyléniquement insaturés, leurs sels et leurs anhydrides, des acides gras insaturés et leurs mélanges.

**14.** Dispersion aqueuse de polymère, pouvant être obtenue par un procédé selon l'une quelconque des revendications 1 à 13, en particulier la dispersion aqueuse de polymère possédant une teneur en eau interne de 20 % à 40 %, par rapport à la teneur totale en eau de la dispersion.

**15.** Utilisation de la dispersion aqueuse de polymère selon la revendication 14 dans des peintures, des revêtements de papier, des mousses, des produits phytosanitaires, des produits cosmétiques, des encres ou des masses à mouler thermoplastiques.

**16.** Utilisation de la dispersion aqueuse de polymère selon la revendication 14 pour l'augmentation du degré de blancheur dans des peintures.

**17.** Peinture, contenant une dispersion aqueuse de polymère pouvant être obtenue par un procédé selon l'une quelconque des revendications 1 à 13.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- WO 2015024882 A
- WO 2015024835 A
- EP 1141083 A
- DE 10211664
- WO 0056802 A
- WO 03062306 A
- WO 9619537 A
- WO 0354204 A
- WO 0393343 A
- WO 05037893 A
- WO 04020503 A
- DE 102004026904
- WO 9916810 A
- WO 05026234 A
- DE 102005009166
- DE 2501123

### In der Beschreibung aufgeführte Nicht-Patentliteratur

- **C. J. MCDONALD ; M. J. DEVON.** *Advances in Colloid and Interface Science,* 2002, vol. 99, 181-213
- **J. BRANDRUP ; E.H. IMMERGUT.** Polymer Handbook. 11, , 316ff
- Fox-Gleichung. John Wiley & Sons Ltd, 1997
- **M. SCHWARTZ ; R. BAUMSTARK.** *water-based acrylates for decorative coatings,* ISBN 3-87870-726-6
- *Annalen der Physik,* 1971, vol. 27, 107-109
- **STEIJSKAL ; TANNER.** *J. Chem. Phys.,* 1965, vol. 42, 288ff